(19) **Europäisches Patentamt / European Patent Office / Office européen des brevets**

(11) **EP 4 318 018 A1**

(12) **EUROPEAN PATENT APPLICATION**
published in accordance with Art. 153(4) EPC

(43) Date of publication:
**07.02.2024 Bulletin 2024/06**

(21) Application number: **22796213.1**

(22) Date of filing: **29.04.2022**

(51) International Patent Classification (IPC):
*G01S 5/02* (2010.01)  *G01S 5/14* (2006.01)
*G01S 3/14* (2006.01)  *G01S 13/02* (2006.01)
*G01S 13/76* (2006.01)  *G01S 13/42* (2006.01)

(52) Cooperative Patent Classification (CPC):
**G01S 3/14; G01S 5/02; G01S 5/14; G01S 13/02;
G01S 13/42; G01S 13/76**

(86) International application number:
**PCT/KR2022/006190**

(87) International publication number:
**WO 2022/231381 (03.11.2022 Gazette 2022/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.04.2021  KR 20210055998
01.09.2021  KR 20210116464**

(71) Applicant: **Samsung Electronics Co., Ltd.
Suwon-si, Gyeonggi-do 16677 (KR)**

(72) Inventors:
• **CHOI, Junyoung**
  **Suwon-si Gyeonggi-do 16677 (KR)**
• **LEE, Mingyu**
  **Suwon-si Gyeonggi-do 16677 (KR)**
• **JUN, Haeyoung**
  **Suwon-si Gyeonggi-do 16677 (KR)**

(74) Representative: **Nederlandsch Octrooibureau
P.O. Box 29720
2502 LS The Hague (NL)**

(54) **METHOD AND DEVICE FOR CONTROLLING NON-UWB DEVICE BY USING UWB**

(57)    The present disclosure provides a method for controlling a non-UWB device by using a UWB. A method of a first UWB device, of the present disclosure, may comprise the steps of: identifying the location of a non-UWB device based on the location of a second UWB device on the basis of the UWB ranging between the first UWB device and the second UWB device; and recognizing the non-UWB device on the basis of the pointing direction of the first UWB device and the identified location of the non-UWB device.

**(Cont. next page)**

**EP 4 318 018 A1**

(a)

(b)

(c)

FIG. 6A

**Description**

[Technical Field]

The disclosure relates to UWB communication and, more specifically, to a method and apparatus for controlling a non-UWB device using UWB.

[Background Art]

The Internet is evolving from the human-centered connection network by which humans create and consume information to the Internet of Things (IoT) network by which information is communicated and processed between things or other distributed components. Another arising technology is the Internet of Everything (IoE), which is a combination of the Big data processing technology and the IoT technology through, e.g., a connection with a cloud server. Implementing the IoT requires technical elements, such as sensing technology, a wired/wireless communication and network infrastructure, service interface and security technologies. A recent ongoing research for thing-to-thing connection is on techniques for sensor networking, machine-to-machine (M2M), or machine-type communication (MTC).

In the IoT environment may be offered intelligent Internet Technology (IT) services that collect and analyze the data generated by the things connected with one another to create human life a new value. The IoT may have various applications, such as the smart home, smart building, smart city, smart car or connected car, smart grid, health-care, or smart appliance industry, or state-of-art medical services, through conversion or integration of conventional information technology (IT) techniques and various industries.

As wireless communication systems evolve to provide various services, a need arises for a method for effectively providing such services. For example, it is possible to use a ranging technique for measuring the distance between electronic devices using ultra-wide band (UWB).

[Detailed Description of the Invention]

[Technical Problem]

The disclosure provides a method for identifying the position of a non-UWB device that does not support UWB ranging using UWB ranging between UWB devices. The disclosure also provides a method for recognizing and controlling a non-UWB device whose position is identified using UWB ranging between UWB devices, by using a UWB device.

[Technical Solution]

According to various embodiments of the disclosure, a method by a first UWB device may comprise identifying a position of a non-UWB device with respect to a position of a second UWB device based on UWB ranging between the first UWB device and the second UWB device and recognizing the non-UWB device based on a point direction of the first UWB device and the identified position of the non-UWB device.

According to various embodiments of the disclosure, a first UWB device may comprise a memory, a transceiver, and a controller connected to the memory and the transceiver. The controller may be configured to identify a position of a non-UWB device with respect to a position of a second UWB device based on UWB ranging between the first UWB device and the second UWB device and recognize the non-UWB device based on a point direction of the first UWB device and the identified position of the non-UWB device

[Advantageous Effects]

According to the method of the disclosure, it is possible to identify the position of a non-UWB device not supporting UWB ranging. Further, according to the method of the disclosure, it is possible to recognize and control a non-UWB device using a UWB device.

[Brief Description of Drawings]

FIG. 1 is a view illustrating an example layer configuration of an electronic device supporting a UWB-based service;
FIG. 2 is a view illustrating an example configuration of a communication system including an electronic device supporting a UWB-based service;

FIG. 3 is a view illustrating an example configuration of a framework included in an electronic device supporting a UWB-based service;

FIG. 4 illustrates a UWB ranging operation between UWB devices;

FIG. 5 illustrates a method for controlling a UWB-disabled device by a UWB-enabled device according to an embodiment of the disclosure;

FIG. 6A illustrates a procedure for registering a UWB-disabled device according to an embodiment of the disclosure;

FIG. 6B illustrates a procedure for registering a UWB-disabled device according to another embodiment of the disclosure;

FIG. 7 illustrates a procedure for recognizing a UWB-disabled device according to an embodiment of the disclosure;

FIG. 8A illustrates a first embodiment of a registration procedure for registering a UWB-disabled device according to an embodiment of the disclosure;

FIG. 8B illustrates a second embodiment of a registration procedure for registering a UWB-disabled device according to an embodiment of the disclosure;

FIG. 9A illustrates a third embodiment of a registration procedure for registering a UWB-disabled device according to an embodiment of the disclosure;

FIG. 9B illustrates a fourth embodiment of a registration procedure for registering a UWB-disabled device according to an embodiment of the disclosure;

FIG. 9C illustrates a fifth embodiment of a registration procedure for registering a UWB-disabled device according to an embodiment of the disclosure;

FIG. 10 illustrates a method for recognizing a target device based on a distance to a straight line pointed at by a UE according to an embodiment of the disclosure;

FIG. 11 is a flowchart illustrating a method of a first UWB device according to an embodiment of the disclosure;

FIG. 12 is a flowchart illustrating a registration step of a first UWB device according to an embodiment of the disclosure;

FIG. 13 is a flowchart illustrating a registration step of a first UWB device according to another embodiment of the disclosure;

FIG. 14 is a view illustrating a structure of a first electronic device according to an embodiment of the disclosure;

FIG. 15 is a view illustrating a structure of a first electronic device according to another embodiment of the disclosure; and

FIG. 16 is a view illustrating a structure of a second electronic device according to an embodiment of the disclosure.

[Mode for Carrying out the Invention]

Hereinafter, embodiments of the disclosure are described in detail with reference to the accompanying drawings.

In describing embodiments, the description of technologies that are known in the art and are not directly related to the present invention is omitted. This is for further clarifying the gist of the present disclosure without making it unclear.

For the same reasons, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skilled in the art of the category of the present disclosure. The present invention is defined only by the appended claims. The same reference numeral denotes the same element throughout the specification.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, a 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments of the disclosure, a "...unit" may include one or more processors.

As used herein, the term 'terminal' or 'device' may also be referred to as a mobile station (MS), user equipment (UE), user terminal (UT), terminal, wireless terminal, access terminal (AT), subscriber unit, subscriber station (SS), wireless device, wireless communication device, wireless transmit/receive unit (WTRU), mobile node, or mobile or may be referred to in other terms. Various embodiments of the terminal may include cellular phones, smart phones with wireless communication capabilities, personal digital assistants (PDAs) with wireless communication capabilities, wireless modems, portable computers with wireless communication capabilities, capturing/recording/shooting/filming devices, such as digital cameras, having wireless communication capabilities, game players with wireless communications capabilities, music storage and playback home appliances with wireless communications capabilities, Internet home appliances capable of wireless Internet access and browsing, or portable units or terminals incorporating combinations of those capabilities. Further, the terminal may include a machine to machine (M2M) terminal and a machine-type communication (MTC) terminal/device, but is not limited thereto. In the disclosure, the terminal may be referred to as an electronic device or simply as a device.

Hereinafter, the operational principle of the disclosure is described below with reference to the accompanying drawings. When determined to make the subject matter of the disclosure unnecessarily unclear, the detailed description of known functions or configurations may be skipped in describing embodiments of the disclosure. The terms as used herein are defined considering the functions in the present disclosure and may be replaced with other terms according to the intention or practice of the user or operator. Therefore, the terms should be defined based on the overall disclosure.

Hereinafter, embodiments of the present invention are described in detail with reference to the accompanying drawings. Further, although a communication system using UWB (e.g., the UWB communication system specified by the FiRa Consortium) is described in connection with embodiments of the present invention, as an example, embodiments of the present invention may also apply to other communication systems with similar technical background or features. For example, a communication system using Bluetooth or ZigBee may be included therein. Further, embodiments of the present invention may be modified in such a range as not to significantly depart from the scope of the present invention under the determination by one of ordinary skill in the art and such modifications may be applicable to other communication systems.

When determined to make the subject matter of the present invention unclear, the detailed description of the known art or functions may be skipped. The terms as used herein are defined considering the functions in the present disclosure and may be replaced with other terms according to the intention or practice of the user or operator. Therefore, the terms should be defined based on the overall disclosure.

In general, wireless sensor network technology is largely divided into a wireless local area network (WLAN) technology and a wireless personal area network (WPAN) technology according to the recognition distance. In this case, WLAN is a technology based on IEEE 802.11 which enables access to the backbone network within a radius of about 100m. WPAN is a technology based on IEEE 802.15 which includes Bluetooth, ZigBee, and ultra-wide band (UWB). A wireless network in which such a wireless network technology is implemented may include a plurality of electronic devices.

According to the definitions by the Federal Communications Commission (FCC), UWB may refer to a wireless communication technology that uses a bandwidth of 500 MHz or more or a bandwidth corresponding to a center frequency of 20% or more. UWB may mean a band itself to which UWB communication is applied. UWB may enable secure and accurate ranging between devices.

Operations of a UWB-based service may include a service initiation step for initiating the UWB-based service, a key provisioning step for providing a key for security, a discovery step for discovering a device, a connection step including secure channel creation and parameter exchange, and/or a UWB ranging step for measuring a distance/direction (angle) between devices.

Meanwhile, according to an embodiment, some steps may be omitted. For example, in an embodiment, the service initiation step and the UWB ranging step may be mandatory steps, but the key provisioning step, discovery step, and connection step may be optional steps. As another example, in another embodiment, the service initiation step, the key provisioning step, and the UWB ranging step may be mandatory steps, but the discovery step and connection step may be optional steps.

The terminology used herein is provided for a better understanding of the disclosure, and changes may be made thereto without departing from the technical spirit of the disclosure.

"Application dedicated file (ADF)" may be, e.g., a data structure capable of hosting application specific data or security data (e.g., credential, cryptographic key) used by an application or secure element (SE) (e.g., embedded SE (eSE)).

"Application protocol data unit (APDU)" may be a command and a response used when communicating with a secure element (SE) (e.g., embedded SE).

"Application specific data" may be, e.g., data used by a specific service and application regardless of the place (e.g., applet, device, etc.).

"Controller" may be a ranging device that defines and controls ranging control messages (RCM) (or control messages). In the disclosure, the ranging device may be, e.g., a ranging device (RDEV) or an enhanced ranging device (ERDEV) as defined in the IEEE Std 802.15.4/4z standard.

"Controllee" may be a ranging device using a ranging parameter in the RCM (or control message) received from the controller.

Unlike "static STS," "dynamic STS" may be an operation mode in which the STS is not repeated during a ranging session. In an embodiment, the STS may be managed by the ranging device, and the ranging session key that generates STS may be managed by a secure component.

"Applet" may be an applet that implements an APDU interface running on a secure component and is identified by an application (applet) ID (AID). This applet may host the data needed for secure ranging. In an embodiment, the applet may be, e.g., a FiRa applet as defined in the FIRA CONSORTIUM COMMON SERVICE & MANAGEMENT LAYER (CSML) specifications.

"Ranging device" is a ranging device that may communicate with another ranging device using a pre-defined profile (e.g., UWB-enabled door lock) or a ranging device capable of supporting a pre-defined UWB ranging service for performing a ranging session with another ranging device. In this disclosure, the ranging device may be referred to as a UWB device or a UWB ranging device. In an embodiment, the ranging device may be, e.g., a FiRa device as defined in the FIRA CONSORTIUM CSML specification.

"UWB-enabled application" may be an application using a Framework API for configuring an OOB Connector, a Secure Service, and/or a UWB service for a UWB session. In this disclosure, "UWB-enabled Application" may be abbreviated as an application or a UWB application. In an embodiment, the UWB-enabled application may be, e.g., a FiRa-enabled application defined in the FIRA CONSORTIUM CSML specification.

"Framework" may be, e.g., a collection of logical software components including an OOB connector, secure Service, and/or UWB service. In an embodiment, the framework may be, e.g., FiRa Framework as defined in the FIRA CONSORTIUM CSML specification.

"OOB Connector" may be a software component for establishing out-of-band (OOB) communication (e.g., Bluetooth low energy (BLE) communication) between ranging devices. In an embodiment, the OOB connector may be, e.g., a FiRa OOB connector as defined in the FIRA CONSORTIUM CSML specification.

"Profile" may be a previously defined set of UWB and OOB configuration parameters. In an embodiment, the profile may be, e.g., a FiRa profile as defined in the FIRA CONSORTIUM CSML specification.

"Profile manager" may implement a profile available on the ranging device. In an embodiment, the profile manager may be, e.g., a FiRa profile manager as defined in the FIRA CONSORTIUM CSML specification.

"Smart ranging device" may be a ranging device (e.g., physical access reader) capable of hosting one or more UWB-enabled applications and implementing the framework or a ranging device that implements a specific screen application provided by the manufacturer. The smart ranging device may be a ranging device capable of installing multiple UWB-enabled applications to support a UWB ranging-based service to perform a ranging session with another ranging device or smart ranging device. In an embodiment, the smart ranging device may be, e.g., a FiRa smart device as defined in the FIRA CONSORTIUM CSML specification.

"Global Dedicated File (GDF)" may be a root level of application specific data including data required to establish a USB session.

"Framework API" may be an API used by a UWB-enabled Application to communicate with the Framework.

"Initiator" may be a Ranging Device that initiates a ranging exchange.

"Object identifier (OID)" may be an identifier of the ADF in the application data structure or a unique ID for identifying a service provider SP.

"Out-of-band (OOB)" may be data communication that does not use UWB as an underlying wireless technology.

"Responder" may be a ranging device that responds to the Initiator in a ranging exchange.

"Scrambled timestamp sequence (STS)" may be a ciphered sequence for increasing the integrity and accuracy of ranging measurement timestamps. In an embodiment, the STS may be generated from the ranging session key.

"Secure channel" may be a data channel that prevents overhearing and tampering.

"Secure component" may be a component that interfaces with UWBS for the purpose of providing RDS to UWBS, e.g., when dynamic STS is used. It may also host UWB-enabled application data.

"Secure Element (SE)" may be a tamper-resistant secure hardware component that may be used as a Secure Component in the Ranging Device.

"Secure service" may be a component for interfacing with the secure component of the system, such as trusted execution environment (TEE) or secure element.

"Static STS" is an operation mode in which STS is repeated during a session, and does not need to be managed by the secure component.

"SUS applet" may be an applet on the secure component operating as an end point for the secure channel between secure components, such as UWBS and SE.

"UWB Service" may be an implementation-specific software component that provides access to the UWBS.

It may be considered that the "UWB session" is established when the controller and controllee(s) may start UWB ranging. The UWB session may be a period from when the controller and the controlee start communication through UWB until the communication stops. A UWB Session may include ranging, data transfer, or both ranging and data transfer.

"UWB session ID" may be an ID (e.g., an integer) for identifying the UWB session.

"UWB session key" may be a key used to protect the UWB Session. In an embodiment, the UWB session key may be used to generate the STS. In this disclosure, the UWB session key may be a UWB ranging session key (URSK), and may be abbreviated as a session key.

"UWB Subsystem (UWBS)" may be a hardware component implementing the UWB PHY and MAC specifications. The UWBS may have an interface to the FiRa framework where the UCI logical interface layer has been implemented and an interface for the secure component to search for the RDS. In an embodiment, the UWB PHY and MAC specifications may be, e.g., the FiRa CONSORTIUM PHY and MAC specifications.

When determined to make the subject matter of the present invention unnecessarily unclear, the detailed description of related known functions or features may be skipped in describing the disclosure.

Hereinafter, various embodiments of the disclosure are described with reference to the accompanying drawings.

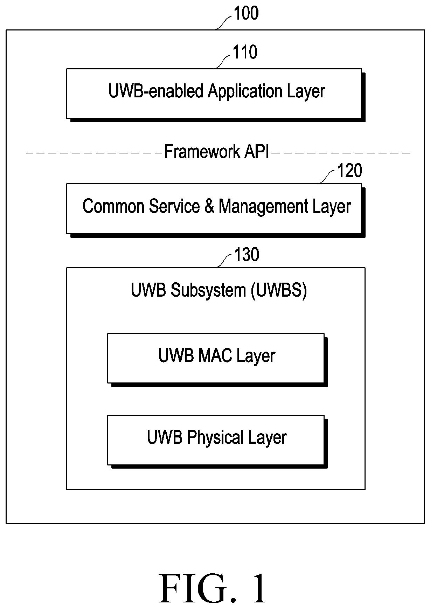

FIG. 1 is a view illustrating an example layer configuration of an electronic device supporting a UWB-based service.

The electronic device (UWB device) of FIG. 1 may be an electronic device supporting UWB ranging (e.g., UWB secure ranging), e.g., a smart ranging device.

Referring to FIG. 1, the electronic device 100 may include a UWB-enabled application layer 110, a common service & management layer 120, and/or a UWB sub system (UWBS) 130 including a UWB MAC layer and a UWB physical layer. According to an embodiment, some layers may not be included in the electronic device 100, or an additional layer (e.g., secure layer) may further be included.

The UWB-enabled application layer 100 may be a layer of an application (e.g., FiRa-enabled application) using the framework API to constitute an OOB connector, secure service, and UWB service for, e.g., a UWB session.

The common service & management layer 110 may define a common component and procedure necessary to implement, e.g., UWB secure ranging.

The UWB MAC layer and the UWB physical layer may be collectively referred to as a UWB subsystem (UWBS) 130. The UWBS may be based on the FiRa PHY and MAC specifications referencing the IEEE 802.15.4z specifications.

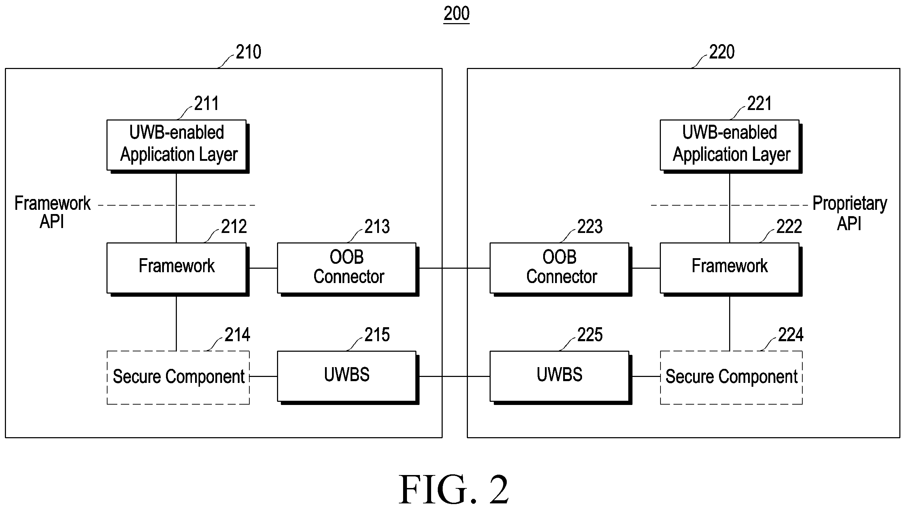

FIG. 2 is a view illustrating an example configuration of a communication system including an electronic device supporting a UWB-based service;

Referring to FIG. 2, a communication system 200 includes a first electronic device 210 and a second electronic device 220. In an embodiment, the first electronic device (first UWB device) 210 may be, e.g., a smart ranging device, and the second electronic device (second UWB device) 220 may be, e.g., a ranging device. Both the first electronic device and the second electronic device may support UWB ranging (e.g., UWB secure ranging).

The first electronic device 210 may host, e.g., one or more UWB-enabled Applications 211, which may be installed by the user (e.g., a mobile phone). It may be based on the framework API. The second electronic device 220 does not provide a framework API, and for example, may use a proprietary interface to implement a specific UWB-enabled application 221 provided only by the manufacturer.

Unlike shown, according to an embodiment, both the first electronic device 210 and the second electronic device 220 may be smart ranging devices or ranging devices.

The first electronic device 210 and the second electronic device 220 may include UWB-enabled application layers 211 and 221, frameworks 212 and 222, OOB components/connectors 213 and 223, secure components 214 and 224, and/or UWBSs 215 and 225. According to an embodiment, some components may be omitted, and an additional component may further be included.

The first electronic device 210 and the second electronic device 220 may generate an OOB connection (channel) through the OOB connectors 213a and 223a (e.g., BLE connectors) and generate a UWB connection (channel) through the UWBSs 215 and 225 and communicate with each other.

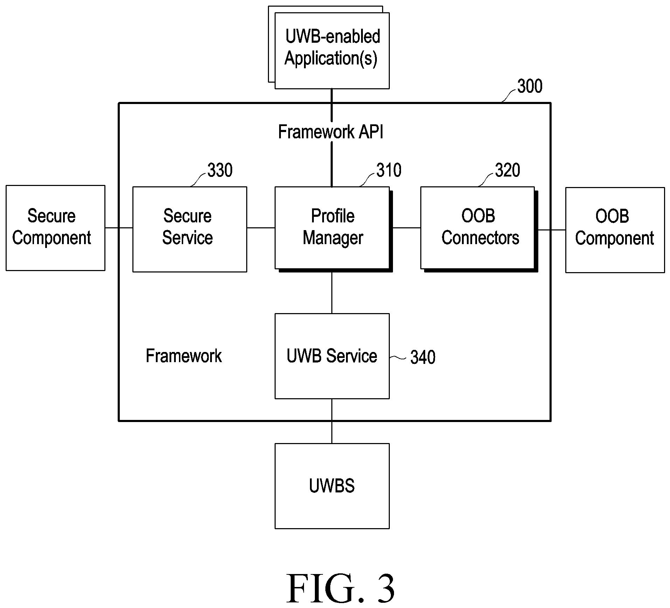

FIG. 3 is a view illustrating an example configuration of a framework included in an electronic device supporting a UWB-based service.

The framework 300 of FIG. 3 may be a FiRa framework as defined in, e.g., the FIRA CONSORTIUM CSML standard.

The framework 300 may be a set of logical software components. The UWB-enabled application may interface with the framework 300 through the framework API provided by the framework.

Referring to FIG. 3, the framework 300 may include a profile manager 310, an OOB connector 320, a secure service 330, and/or a UWB service 340. According to an embodiment, some components may be omitted, and an additional component may further be included.

The profile manager component 310 may manage a profile(s) available on the ranging device. The profile may be a set of UWB and OOB configuration parameters required to establish a successful UWB session between ranging devices. The profile manager 310 may abstract the UWB and OOB configuration parameters from the UWB-enabled application.

The OOB connector 320 may be a component for establishing an OOB connection between ranging devices. The OOB connector 320 may handle the discovery phase and connection phase for providing a UWB-based service.

The secure service 330 may serve to interface with a secure component, such as a secure element (SE), eSE, or trusted execution environment (TEE). The secure component may be a component that interfaces with the UWBS to transfer UWB ranging data to the UWBS.

The SE is a safe secure module based on tamper resistant characteristics and, if no contract relationship is established between various entities, installation and driving of an application are limited.

The eSE means a fixed SE fixed and used in the electronic device. The eSE is typically manufactured exclusively for the manufacturer at the request of the terminal manufacturer, and may be manufactured including the operating system and framework. For the eSE, a service control module in the form of an applet may be remotely downloaded and installed and be used for various secure services, such as e-wallet, ticketing, e-passport, or digital key.

The TEE may be an S/W-centered secure environment that creates a virtual separated environment based on, e.g., a code supported by a specific chipset (e.g., ARM-based). The TEE has tampered resistant characteristics but has the advantages of large available memory, high speed, and low costs as compared with the SE. Further, since various service providers are immediately available within a range allowed by the mobile manufacturer, the TEE has the advantage of low complexity between entities as compared with the SE.

The UWB service 340 may be a component that provides access to the UWBS.

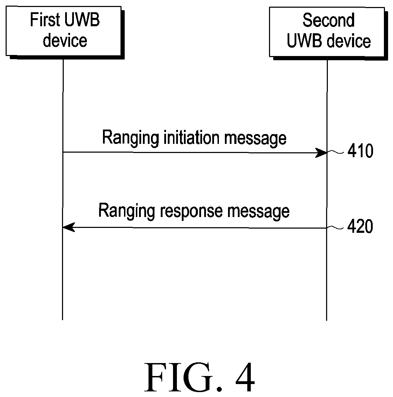

FIG. 4 illustrates a UWB ranging operation between UWB devices.

The UWB device of FIG. 4 may be one of the first UWB device or the second UWB device having the configuration/structure of FIGS. 1 to 3, but without limitations thereto, and may be various types of electronic devices supporting UWB ranging.

In the embodiment of FIG. 4, the first electronic device (the first UWB device) corresponds to a ranging device that initiates a ranging exchange by transmitting a first ranging frame (a ranging initiation message) (410). In the disclosure, the first electronic device may be referred to as an initiator.

The second electronic device (the second UWB device) corresponds to a ranging device that responds to the ranging initiation message received from the initiator. In the disclosure, the second electronic device may be referred to as a responder. In an embodiment, the responder may transmit a ranging response message 420.

In an embodiment, the first electronic device may be a controller, and the second electronic device may be a controllee. The opposite may also be met. Here, the controller may be a ranging device that defines and controls a ranging feature by transmitting a control message. The controllee may be a ranging device using a ranging feature configured through the control message from the controller.

In an embodiment, the first electronic device and the second electronic device may perform a ranging operation using a preset ranging method. In an embodiment, the ranging method may include a two-way ranging (TWR) scheme and/or a one-way ranging (OWR) scheme. In an embodiment, the TWR scheme may include single-sided two-way ranging (SS-TWR) and/or double-sided two-way ranging (DS-TWR). For the ranging methods, refer to the IEEE 802.15.4/4z standard and the description of FiRa CONSORTIUM referencing the standard.

Through the UWB ranging operation, the first electronic device and/or the second electronic device may obtain distance information and direction information, and identify a relative position of the UWB device based on the distance information and direction information.

In an embodiment, the distance information may include time-of-flight (ToF) information (ToF measurement information). The ToF corresponds to the UWB propagation time between the transmitter and the receiver. By using accurate message timestamping, the ToF may provide accurate estimation of the relative distance between the two devices. The ToF information may be measured by either or both of the ranging devices, and may be exchanged between the initiator and the responder through a predefined signaling scheme (e.g., a control message including a UWB ranging result).

In an embodiment, the direction information may include angle-of-arrival (AoA) information (AoA measurement information). AoA may be obtained by measuring the phase difference or the difference in the arrival time of the arrival signal in the antennas. The AoA information may include an AoA azimuth (horizontal angle) and an AoA elevation (vertical angle). The AoA information, together with the ToF information, may be used to determine a relative position of the UWB device. The AoA information may be measured by either or both of the ranging devices, and may be exchanged between the initiator and the responder through a predefined signaling scheme (e.g., a control message including a UWB ranging result).

In an embodiment, the PHY packet including the ranging frame (e.g., UWB initiation message/response message) may include an STS. Whether the PHY packet includes the STS, the position where the STS is included, and the structure of the packet may vary depending on the STS packet configuration. Here, the STS corresponds to an encrypted sequence used to increase integrity and accuracy of the ranging measurement timestamp. When the STS is used, the initiator and the responder should share the STS seed (e.g., ranging session key) used to generate and restore the STS in advance. The sharing of the ranging session key may be performed, e.g., through a secure channel established through BLE.

Hereinafter, various embodiments of a method for registering and recognizing a UWB-disabled device (apparatus) using UWB ranging between UWB-enabled devices (apparatuses) are described with reference to each drawing.

In the disclosure, various embodiments are described under the assumption that one of the UWB support devices is a reference device (e.g., a TV) supporting UWB ranging, and the other is a user equipment (UE) (e.g., the user's smartphone) supporting UWB ranging, and various embodiments. However, the disclosure is not limited thereto, and the UWB-enabled device may be various electronic devices supporting UWB ranging. In an embodiment, the reference device and the UE may be one of the first UWB device or the second UWB device described above with reference to FIGS. 1 to 4. For example, the reference device and the UE may be devices corresponding to, or including, an RDEV or an ERDEV.

In the disclosure, the UE supporting UWB ranging may be referred to as a UWB UE, a UE, a first UWB-enabled device, a first UWB device, or a first UWB apparatus. Also, the reference device supporting UWB ranging may be referred to as a UWB reference device or a reference device, a second UWB-enabled device, a second UWB device, or a second UWB apparatus.

In the disclosure, a UWB-disabled device is a device to be controlled by a UWB-enabled device (e.g., a UE), and may be referred to as a target device, a non-UWB device, or a non-UWB apparatus.

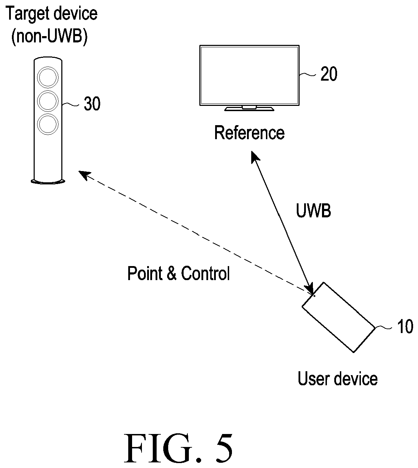

FIG. 5 illustrates a method for controlling a UWB-disabled device by a UWB-enabled device according to an embodiment of the disclosure.

The embodiment of FIG. 5 discloses a method in which a UWB UE 10 (e.g., the user's smartphone) points at and controls a UWB-disabled device (target device 30) (e.g., an air conditioner) using the result of UWB ranging with a UWB reference device 20 (e.g., a TV). In an embodiment, the UWB ranging operation between the UE 10 and the reference device 20 may follow the UWB ranging operation of FIG. 4. For example, the TWR UWB ranging operation of FIG. 4 may be performed. In this case, the UE 10 may serve as an initiator, and the reference device 20 may serve as a responder. The opposite is also possible.

In the embodiment of FIG. 5, the UE 10 does not need to measure the distance between the UE 10 and the target device 30 to point at and control the target device 30. In other words, the UE 10 does not need to perform a ranging procedure for distance measurement (e.g., ToF measurement) with the target device 30.

Instead, the UE 10 may register and recognize the target device 30 using the result of UWB ranging with the reference device 20. Accordingly, the UE 10 may point at and control the target device 30 even if the distance between the UE 10 and the target device 30 is not directly measured/calculated by using a ranging procedure (e.g., UWB ranging). In this case, the UE 10 may control the UWB-disabled device, thereby expanding the user experience using the UWB.

Hereinafter, various embodiments of a procedure for registering and recognizing a target device 30 are described with reference to each drawing.

<Embodiment A of registration procedure: Embodiment of registering target device (non-UWB device) using one UE (UWB device)>

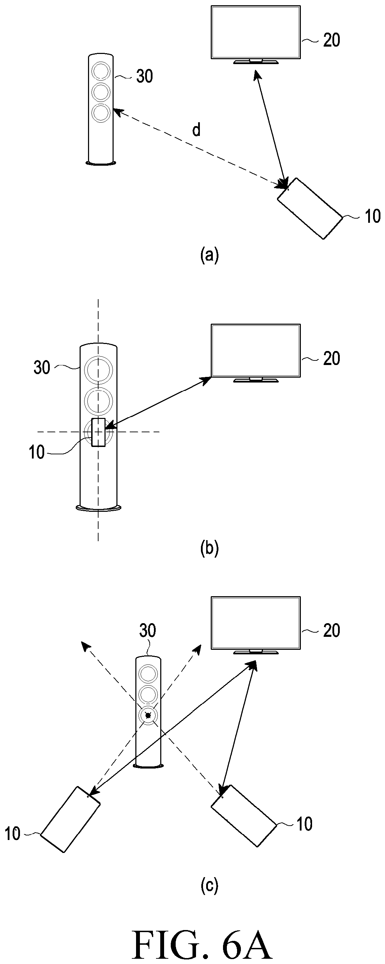

FIG. 6A illustrates a procedure for registering a UWB-disabled device according to an embodiment of the disclosure.

In the embodiment of FIG. 6A, the registration procedure (step) corresponds to a procedure (step) for identifying (or determining) the position of the UWB-disabled device (target device 30). In order to identify the position of the target device 30 in the registration procedure, a UWB ranging result between UWB-enabled devices (UE 10/reference device 20) may be used. In an embodiment, the registration procedure may be performed by the UE 10. However, the disclosure is not limited thereto, and according to an embodiment, the registration procedure may be performed by the reference device 20.

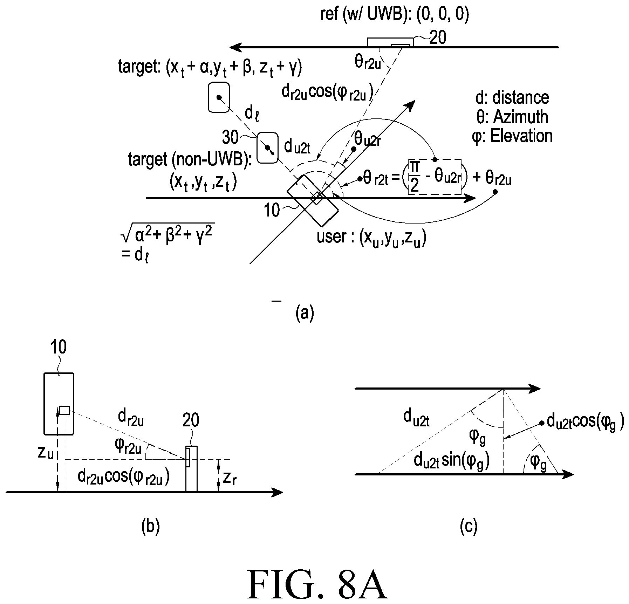

FIG. 6A(a) illustrates a first option of the registration procedure. The first option corresponds to a method of identifying the position of the target device 30 by providing a guide (user guide) for allowing the UE 10 to be positioned at a predetermined distance d from the target device 30 and point to the target device 30. An example method of the first option is described below with reference to FIG. 8A.

FIG. 6A(b) illustrates a second option of the registration procedure. The second option corresponds to a method for identifying the position of the target device 30 by providing a guide for allowing the UE 10 to be positioned at a specific position/area of the target device 30 (e.g., providing a guide for allowing the UE 10 to be positioned near the front and center of the target device 30). In an embodiment, the second option may be one of specific embodiments of the first option. For example, the second option may be a specific embodiment of the first option in which the distance d of the first option is set to 0 or a value close to 0.

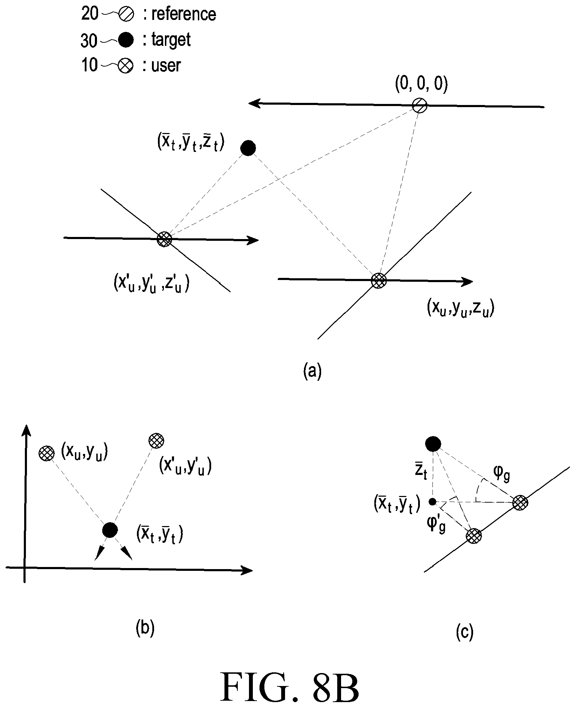

FIG. 6A(c) illustrates a third option of the registration procedure. The third option corresponds to a method of identifying the position of the target device 30 by providing a guide for pointing at the target device 30 (or a specific position/area of the target device 30) while changing the position of the UE 10. In the embodiment of FIG. 6A(c), the UE 10 should point at the target device 30 at at least two positions. The number of positions where the UE 10 points at the target device 30 may vary depending on settings. As the number of such pointing positions increases, the accuracy of the identified position of the target device 30 increases, but the time required for the registration procedure increases. Therefore, it is necessary to set an appropriate number of pointing positions. An example method of the third option is described below with reference to FIG. 8B.

Meanwhile, as compared with the third option, the first option and the second option have poor accuracy of the position of the target device 30 but has the advantage of a reduced time required for registration.

<Embodiment B of registration procedure: Embodiment of registering target device (non-UWB device) using a plurality of UEs (UWB devices)>

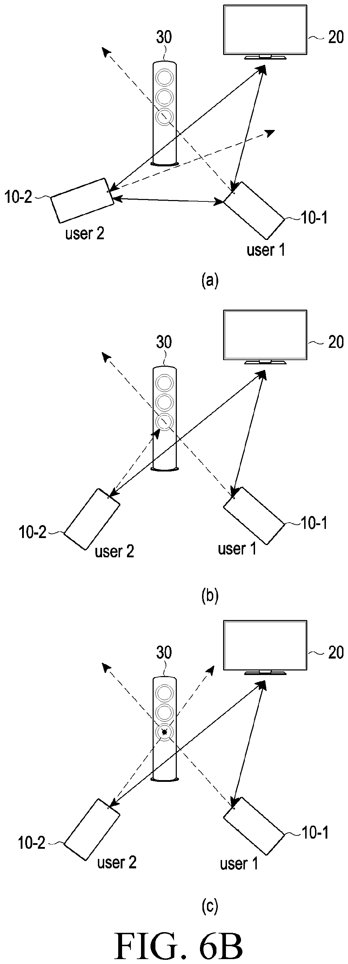

FIG. 6B illustrates a procedure for registering a UWB-disabled device according to another embodiment of the disclosure.

In the embodiment of FIG. 6B, the registration procedure (step) corresponds to a procedure (step) for identifying (or determining) the position of the UWB-disabled device (target device 30). In order to identify the position of the target device 30 in the registration procedure, a UWB ranging result between UWB-enabled devices may be used. For example, a UWB ranging result between the plurality of UEs 10-1 and 10-2 and the reference device 20 and a UWB ranging result between the plurality of UEs 10-1 and 10-2 may be used. As an embodiment, the UWB ranging result may include distance information and/or angle information (e.g., AoA information) between two UWB devices.

In an embodiment, the registration procedure may be performed by the plurality of UEs 10-1 and 10-2. However, the disclosure is not limited thereto, and according to an embodiment, the registration procedure may be performed by the reference device 20.

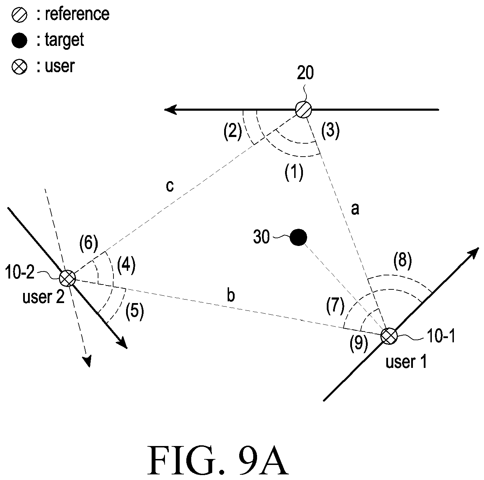

FIG. 6B(a) illustrates a fourth option of the registration procedure. The fourth option corresponds to a method of identifying the position of the target device 30 when only one UE 10-1 among the plurality of UEs 10-1 and 10-2 points at the target device 30. An example method of the fourth option is described below with reference to FIG. 9A.

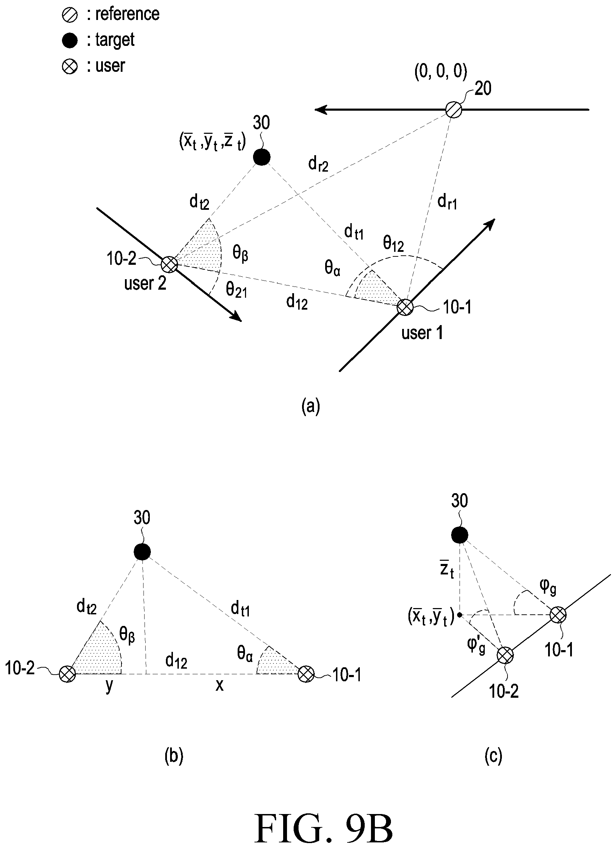

FIG. 6B(b) illustrates a fifth option of the registration procedure. The fifth option corresponds to a method of identifying the position of the target device 30 when the plurality of UEs 10-1 and 10-2 point at the target device 30 but there is no intersection toward the target device 30. An example method of the fifth option is described below with reference to FIG. 9B.

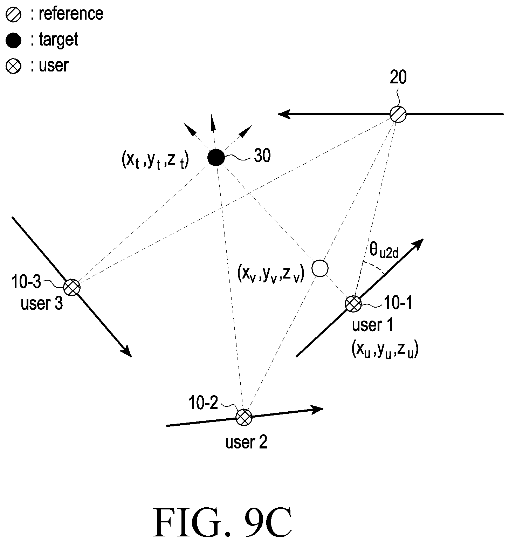

FIG. 6B(c) illustrates a sixth option of the registration procedure. The sixth option corresponds to a method of identifying the position of the target device 30 when the plurality of UEs 10-1 and 10-2 point at the target device 30 but there is an intersection toward the target device 30. An example method of the sixth option is described below with reference to FIG. 9C.

Meanwhile, in the embodiment of FIG. 6B, an example in which there are two UEs for a registration procedure has been described, but the embodiments are not limited thereto. For example, even when there are three or more UEs, the above-described options of the registration procedure may be applied.

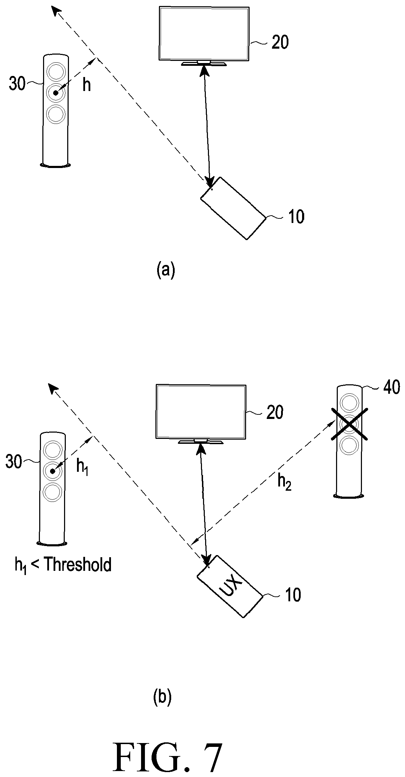

FIG. 7 illustrates a procedure for recognizing a UWB-disabled device according to an embodiment of the disclosure.

In the embodiment of FIG. 7, the recognition procedure (step) corresponds to a procedure (step) for identifying (or determining) whether the UE 10 points at a registered UWB-disabled device (target device 30) (e.g., the target device 30 registered according to one of the methods (options) of FIGS. 6A/B) for control purposes. In other words, it corresponds to a procedure of recognizing the target device 30 to be controlled through pointing. In the recognition procedure, UWB ranging results between UWB-enabled devices (UE 10/reference device 20) may be used to identify the current position of the UE 10.

The recognition procedure may include two steps, e.g., the first step illustrated in FIG. 7(a) and the second step illustrated in FIG. 7(b). In an embodiment, the recognition procedure may be performed by the UE 10. However, the disclosure is not limited thereto, and according to an embodiment, the recognition procedure may be performed by the reference device 20.

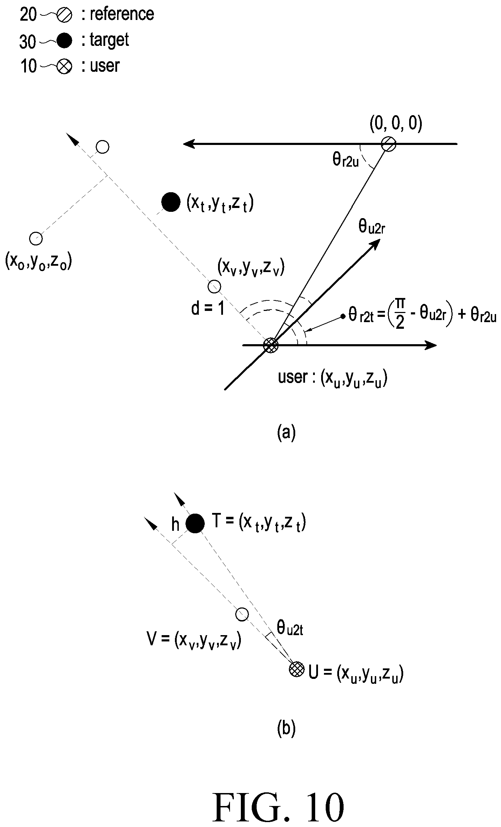

The first step corresponds to a step of identifying (or calculating) the distance h between the straight line component in the direction pointed by the UE 10 and the target device 30. An example method of calculating the distance h is described below with reference to FIG. 10.

The second step corresponds to a step in which the UE 10 recognizes the target device 30 by identifying (or determining) whether the distance h meets a preset threshold. In an embodiment, the second step may include determining whether the distance h is smaller than the threshold (determining whether a recognition condition is met), when the distance h is smaller than the threshold (or smaller than or equal to the threshold), recognizing that the UE 10 points at the target device 30 (recognizing the target device 30), and when the distance h is larger than or equal to the threshold (or larger than the threshold), refraining from recognizing that the UE 10 points at the target device 30.

In an embodiment, the threshold may be set to different criteria/conditions/methods according to options used in the registration procedure of the target device 30. For example, when the registration procedure of option 1 is used, the threshold may be set based on the guided distance d. For example, 1/2 of the distance d may be set to the threshold. As another example, when the registration procedure of option 3 is used, the threshold may be set based on the number of pointing positions. For example, when the number of pointing positions increases, the threshold may be set to decrease. For example, the threshold when the number of pointing positions is 3 may be set to a value smaller than the threshold when the number of pointing positions is 2. This is because, as the number of pointing positions increases, the position accuracy of the target device 30 increases, and thus, even if the threshold for a large number of pointing positions is set to a small value, it does not significantly affect the accuracy of recognition.

In an embodiment, the threshold may be set to differ depending on the type and/or size (or area) of the target device 30 to be registered. For example, in the case of a target device having a relatively larger size (or area) than other devices, a relatively larger threshold than those of the other devices may be set as the threshold of the target device. This may contribute to device recognition.

In an embodiment, the type and/or size (or area) of the target device 30 may be identified based on a user input received within the above-described registration procedure (step) or before the registration step. For example, before or within the registration step, the user may select the type and size (or area) of the target device 30 to be registered through a user input. As another example, before or within the registration step, the user may select only the type of the target device 30 to be registered through a user input. In this case, the area of the target device 30 may be identified based on the selected type of the target device 30.

In an embodiment, when the recognized target device 30 is present, the UE 10 may provide control information for controlling the target device 30 to the user (e.g., display a control UX).

FIG. 7(b) illustrates an embodiment in which only one target device 30 meets the threshold (the recognition condition is met) and the other target device 40 does not meet the threshold (the recognition condition is not met), but the disclosure is not limited thereto. According to an embodiment, there may be a plurality of target devices 30 that meet the threshold (meet the recognition condition). In other words, the plurality of target devices 30 may be simultaneously recognized. In this case, the UE 10 may provide (e.g., display) a list of the plurality of recognized target devices 30 to the user. Accordingly, the user may select and control the target device 30 desired to be controlled by the user from among the plurality of target devices 30.

FIG. 8A illustrates a first embodiment of a registration procedure for registering a UWB-disabled device according to an embodiment of the disclosure.

FIG. 8A illustrates an example of a registration procedure according to the first option or the second option of the registration procedure illustrated in FIG. 6A(a) or 6A(b).

In the embodiment of FIG. 8A, it is assumed that a guide (user guide) for pointing at the target device 30 within $d_{u2f}$ meters from the target device 30 is provided to the user.

The registration procedure of FIG. 8A may include identifying the position of the UE 10 with respect to the position of the reference device 20 (first step (operation)), identifying the position of the target device 30 pointed at by the user with respect to the position of the UE 10 (second step (operation)), and/or identifying the position of the target device 30 with respect to the position of the reference device 20 (third step (operation)). In an embodiment, the second step (operation) and the third step (operation) may be performed as one step.

Through the registration procedure, the position of the target device 30 may be identified with respect to the position (reference position) of the reference device 20. The identified position of the target device 30 may be stored and used in a subsequent recognition procedure.

In the embodiment of FIG. 8A, it is assumed that the position of the reference device 20 on the xy plane is (0,0,0).

**First step (operation)**

In an embodiment, the first step (operation) may be performed using UWB ranging between the UE 10 and the reference device 20. For example, the UWB two-way ranging (TWR) scheme described with reference to FIG. 4 may be used.

As a result of the UWB ranging, distance information (e.g., ToF information) indicating the distance between the reference device 20 and the UE 10 and direction (angle) information (e.g., angle-of-arrival (AoA) information including AoA azimuth (horizontal angle) and/or AoA elevation (vertical angle)) indicating the angle between the reference device 20 and the UE 10 may be obtained. For example, as shown in FIG. 8A(a), through UWB ranging, the distance $d_{r2u}$ between the reference device 20 and the UE 10 on the three-dimensional plane, the horizontal angle (AoA azimuth $\theta_{r2u}$) between the reference device 20 and the UE 10 with respect to the reference device 20, and the vertical angle (AoA elevation $\varphi_{r2u}$) between the reference device 20 and the UE 10 with respect to the reference device 20 may be obtained.

The position $(x_u,y_u,z_u)$ of the UE 10 with respect to the position of the reference device 20 may be determined based on the distance information and the direction information. For example, the position of the UE 10 may be determined based on Equation 1 below.

$$[\text{Equation 1}]$$

$$x_u = d_{r2u}\cos(\varphi_{r2u})\cos(\theta_{r2u})$$
$$y_u = d_{r2u}\cos(\varphi_{r2u})\sin(\theta_{r2u})$$
$$z_u = z_r + d_{r2u}\sin(\varphi_{r2u})$$

Here, $\theta_{r2u}$ denotes the horizontal angle between the UE 10 and the reference device 20 with respect to the reference device 20. $\varphi_{r2u}$ denotes the vertical angle between the reference device 20 and the UE 10 with respect to the reference device 20.

Here, $d_{r2u}\cos(\varphi_{r2u})$ denotes the two-dimensional distance between the reference device 20 and the UE 10. This may be obtained by projecting the straight line corresponding to the three-dimensional distance $d_{r2u}$ to the 2D (xy plane) based on $\varphi_{r2u}$. This is as illustrated in FIG. 8A(b).

**Second step (operation)**

In an embodiment, the second step (operation) may be performed using a sensor (e.g., a (gravity) acceleration sensor) of the UE 10. For example, the acceleration sensor may be used in the second step to obtain an inclination (e.g., an inclination relative to the ground) of the UE 10 pointing at the target device 30. In the disclosure, the inclination may be represented as cP g. The position of the target device 30 with respect to the UE 10 may be identified through the inclination $\varphi_g$.

**Third step (operation)**

In the third step (operation), the position $(x_t,y_t,z_t)$ of the target device 30 with respect to the position of the reference device 20 may be determined.

In an embodiment, the UE 10 may use the result of the first step and the result of the second step to determine the position of the target device 30 with respect to the position of the reference device 20. For example, the position of the target device 30 may be determined based on Equation 2 below.

$$[\text{Equation 2}]$$

$$x_t = x_u + d_{u2t}\sin(\varphi_g)\cos(\theta_{r2t}+\pi)$$
$$y_t = y_u + d_{u2t}\sin(\varphi_g)\sin(\theta_{r2t}+\pi)$$
$$z_t = z_u - d_{u2t}\cos(\varphi_g)$$

Here, $d_{u2t}\sin(\varphi_g)$ denotes the two-dimensional distance between the UE 10 and the target device 30. This may be obtained by projecting the straight line corresponding to the three-dimensional distance $d_{u2t}$ between the UE 10 and the target device 30 to the 2D (xy plane) based on the inclination $\varphi_g$. This is as illustrated in FIG. 8A(c).

Here, $\theta_{r2t}$ denotes the horizontal angle between the reference device 20 and the target device 30 with respect to the reference device 20. For example, $\theta_{r2t}$ may be determined based on Equation 3 below.

$$[\text{Equation 3}]$$

$$\theta_{r2t} = (\frac{\pi}{2} - \theta_{u2r}) + \theta_{r2u}$$

Here, $\theta_{u2r}$ denotes the horizontal angle between the UE 10 and the reference device 20 with respect to the UE 10. In an embodiment, $\theta_{u2r}$ may be obtained as the above-described UWB ranging result between the UE 10 and the reference device 20.

In the embodiment of FIG. 8A, as described above, for the registration procedure, the UE 10 is guided to be positioned within a predefined distance d. In this case, since it is difficult for the UE 10 to be positioned at a distance that completely matches the distance d, it may be difficult to grasp the exact position of the target device. This may cause a recognition error of the target device 30. Therefore, in order to reduce such a recognition error, all positions on the straight line pointed at by the UE 10 and within a predetermined range from the distance d may be determined as positions of the target device. In other words, the position of the target device may be specified as an area meeting the above conditions, rather than one point. For example, the position $(x_t+\alpha, y_t+\beta, z_t+\gamma)$ of FIG. 8A(a) may also be identified as a position of the target device 30.

FIG. 8B illustrates a second embodiment of a registration procedure for registering a UWB-disabled device according to an embodiment of the disclosure.

The embodiment of FIG. 8B illustrates an example of a registration procedure according to the third option of the registration procedure illustrated in FIG. 6A(c).

In the embodiment of FIG. 8B, it is assumed that a guide (user guide) for allowing the UE 10 to point at the target device 30 at at least two positions is provided to the UE 10 (user).

The registration procedure of FIG. 8B may include identifying the position of the UE 10 with respect to the position of the reference device 20 (first step (operation)), identifying the position of the target device 30 pointed at by the UE 10 with respect to the position of the UE 10 (second step (operation)), and/or identifying the position of the target device 30 with respect to the position of the reference device 20 (third step (operation)). In an embodiment, the second step and the third step (operation) may be performed as one step.

Through the registration procedure, the position of the target device 30 may be identified with respect to the position (reference position) of the reference device 20. The identified position of the target device 30 may be stored and used in a subsequent recognition procedure.

In the embodiment of FIG. 8B, it is assumed that the position of the reference device 20 on the xy plane is (0,0,0).

**First step (operation)**

In an embodiment, the first step (operation) may be performed using UWB ranging between the UE 10 and the reference device 20, at each position. For example, the UE 10 may perform the UWB ranging operation with the reference device 20 at a first position, and may perform the UWB ranging operation with the reference device 20 at a second position. In this case, the used ranging operation corresponds to the same operation as the ranging operation of the first step of FIG. 8A. For example, the UWB TWR scheme described with reference to FIG. 4 may be used in the same manner. Accordingly, for the operation of the first step of FIG. 8B, refer to the description (e.g., Equation 1 and the corresponding description) of the operation of the first step of FIG. 8A.

As a result of ranging at each position, as shown in FIG. 8B(a), the first position $(x_u, y_u, z_u)$ of the UE 10 and the second position $(x'_u, y'_u, z'_u)$ of the UE 10 with respect to the position of the reference device 20 may be obtained.

**Second step (operation)**

In an embodiment, the second step (operation) may be performed using a sensor (e.g., a (gravity) acceleration sensor) of the UE 10. For example, the acceleration sensor may be used in the second step to obtain an inclination (e.g., an inclination relative to the ground) of the UE 10 pointing at the target device 30. In the embodiment of FIG. 8B, the UE 10 may obtain an inclination using an acceleration sensor at each position. As shown in FIG. 8B(c), the inclination of the UE 10, obtained at the first position, may be represented as $\varphi_g$, and the inclination of the UE 10, obtained at the second position, may be represented as $\varphi'_g$. The position of the target device 30 with respect to the UE 10 at each position may be identified through each inclination.

### Third step (operation)

In the third step (operation), the position $(\overline{x_t}, \overline{y_t}, \overline{z_t})$ of the target device 30 with respect to the position of the reference device 20 may be determined.

In an embodiment, the UE 10 may obtain the xy coordinates $(\overline{x_t}, \overline{y_t})$ of the target device 30 by projecting the first position and second position of the UE 10 to the xy plane and calculating the intersection of the straight line pointing at the target device 30 at the first position and the straight line pointing at the target device 30 at the second position on the xy plane. This is as illustrated in FIG. 8B(b). The reason for projecting to the xy plane is that it may be difficult to directly calculate the intersection on 3D.

In this case, the position (first coordinates) of the target device 30 with respect to the reference, calculated with respect to the first position $(x_u, y_u)$ projected to the xy plane of the UE 10 may be obtained. Further, the position (second coordinates) of the target device 30 with respect to the reference, calculated with respect to the second position $(x'_u, y'_u)$ projected to the xy plane of the UE 10 may be obtained. Obtaining each of the positions (coordinates) may follow Equation 2 of FIG. 8A and the corresponding description. However, unlike in the embodiment of FIG. 8A, in the embodiment of FIG. 8B, the distance between the first position of the UE 10 and the target device 30 and the distance between the second position of the UE 10 and the target device 30 are not set as constants, the obtained first coordinates and second coordinates, respectively, correspond to all coordinates on the straight line pointing at the target device 30 at the first position and the second position. Accordingly, it is possible to obtain the xy coordinates $(\overline{x_t}, \overline{y_t})$ of the target device 30 by obtaining the intersection of the straight line constituting the first coordinates and the straight line constituting the second coordinates, thusly determined.

Meanwhile, although the above description assumes that the UE 10 points at the target device from two positions, an embodiment in which the UE 10 points at the target device from three or more positions is also possible as described above. In this case, two or more intersections may be present. Accordingly, it is possible to obtain the xy coordinates $(\overline{x_t}, \overline{y_t})$ of the target device 30 by determining one intersection from two or more intersections. For example, the UE 10 may calculate an intermediate value of two or more intersections and determine the same as the xy coordinates $(\overline{x_t}, \overline{y_t})$ of the target device 30.

Next, the z axis $\overline{z_t}$ of the target device 30 on 3D may be obtained based on the inclination $\varphi_g$ and/or $\varphi'_g$. This is as illustrated in FIG. 8B(c).

FIG. 9A illustrates a third embodiment of a registration procedure for registering a UWB-disabled device according to an embodiment of the disclosure.

The embodiment of FIG. 9A illustrates an example of a registration procedure according to the fourth option of the registration procedure illustrated in FIG. 6B(a).

In the embodiment of FIG. 9A, it is assumed that only the first UE 10-1 points at the target device 30. Further, the first UE 10-1 may not only perform UWB ranging with the reference device 20, but may also perform UWB ranging with the second UE 10-2. Accordingly, data (information) obtained as a result of UWB ranging between the first UE 10-1 and the second UE 10-2 may be used for positioning of the target device 30. For example, direction (angle) information (e.g., AoA information) obtained as a result of UWB ranging between the first UE 10-1 and the second UE 10-2 may be used to obtain essential direction (angle) information (e.g., essential AoA information) for positioning of the target device 30.

The registration procedure of FIG. 9A may include identifying the position of the first UE 10-1 with respect to the position of the reference device 20 (first operation), identifying the position of the target device 30 pointed at by the user with respect to the position of the first UE 10-1 (second operation), and/or identifying the position of the target device 30 with respect to the position of the reference device 20 (third operation).

Through the registration procedure, the position of the target device 30 may be identified with respect to the position (reference position) of the reference device 20. The identified position of the target device 30 may be stored and used in a subsequent recognition procedure.

In the embodiment of FIG. 9A, it is assumed that the position of the reference device 20 on the xy plane is (0,0,0).

### First operation

In an embodiment, the first operation may be performed using UWB ranging between the first UE 10-1 and the reference device 20. For example, the UWB two-way ranging (TWR) scheme described with reference to FIG. 4 may be used.

As a result of the UWB ranging, distance information (e.g., ToF information) indicating the distance between the reference device 20 and the first UE 10-1 and direction (angle) information (e.g., angle-of-arrival (AoA) information including AoA azimuth (horizontal angle) and/or AoA elevation (vertical angle)) indicating the angle between the reference device 20 and the UE 10 may be obtained. For example, through UWB ranging, the distance $d_{r2u}$ between the reference device 20 and the first UE 10-1 on the 3D plane, the horizontal angle (AoA azimuth $\theta_{r2u}$) (angle (1) of FIG. 9A) between the reference device 20 and the first UE 10-1 with respect to the reference device 20, and the vertical angle (AoA elevation $\varphi_{r2u}$) between the reference device 20 and the first UE 10-1 with respect to the reference device 20 may be obtained.

The position $(x_u, y_u, z_u)$ of the first UE 10-1 with respect to the position of the reference device 20 may be determined based on the distance information and the direction information. For example, the position of the first UE 10-1 may be determined based on Equation 1 described above.

### Second operation

In an embodiment, the second operation may be performed using a sensor (e.g., a (gravity) acceleration sensor) of the first UE 10-1. For example, the acceleration sensor may be used in the second step to obtain an inclination (e.g., an inclination relative to the ground) of the first UE 10-1 pointing at the target device 30. In the disclosure, the inclination may be represented as $\varphi_g$. The position of the target device 30 with respect to the first UE 10-1 may be identified through the inclination $\varphi_g$.

### Third operation

In the third operation, the position $(x_t, y_t, z_t)$ of the target device 30 with respect to the position of the reference device 20 may be determined.

In an embodiment, the first UE 10-1 may use the result of the first step and the result of the second step to determine the position of the target device 30 with respect to the position of the reference device 20. For example, the first UE 10-1 may determine the position of the target device 30 based on Equations 2 and 3 described above.

As described above, $\theta_{r2t}$ in Equation 2 denotes the horizontal angle between the reference device 20 and the target device 30 with respect to the reference device 20. As in Equation 3, $\theta_{r2t}$ may be determined based on the horizontal angle $\theta_{u2r}$ (angle (8) of FIG. 9A) between the first UE 10-1 and the reference device 20 with respect to the first UE 10-1.

In an embodiment, $\theta_{u2r}$ may be obtained directly from the result of UWB ranging between the first UE 10-1 and the reference device 20.

In another embodiment, $\theta_{u2r}$ may be obtained using data obtained from the result of UWB ranging between the first UE 10-1 and the second UE 10-2, as auxiliary information.

Depending on the context, it may be difficult to obtain $\theta_{u2r}$ directly from the result of UWB ranging between the first UE 10-1 and the reference device 20. In this case, $\theta_{u2r}$ may be obtained based on, e.g., Equation 4 below, using the result of UWB ranging between the first UE 10-1 and the second UE 10-2.

$$[\text{Equation 4}]$$

$$(8) = (7) - (9)$$

$$(3) + (6) + (9) = \pi$$

$$\checkmark \quad (3) = |(1) - (2)|$$

$$\checkmark \quad (6) = |(4) - (5)|$$

$$\checkmark \quad (9) = \pi - |(1) - (2)| - |(4) - (5)|$$

$$(8) = (7) - (\pi - |(1) - (2)| - |(4) - (5)|)$$

Each parameter of Equation 4 is described below.

Line segment a: A line segment connecting the position of the reference device 20 and the position of the first UE 10-1

Line segment b: A line segment connecting the position of the first UE 10-2 and the position of the second UE 10-2
Line segment c: A line segment connecting the position of the second UE 10-3 and the position of the reference device 20
Angle (1): An angle between the reference device 20 and the first UE 10-1 with respect to the reference device 20
Angle (2): An angle between the reference device 20 and the second UE 10-2 with respect to the reference device 20
Angle (3): An angle between line segment c and line segment a
Angle (4): An angle between the second UE 10-2 and the reference device 20 with respect to the second UE 10-2
Angle (5): An angle between the second UE 10-2 and the first UE 10-1 with respect to the second UE 10-2
Angle (6): An angle between line segment b and line segment c
Angle (7): An angle between the first UE 10-1 and the second UE 10-2 with respect to the first UE 10-1
Angle (8): An angle between the first UE 10-1 and the reference device 20 with respect to the first UE 10-1
Angle (9): An angle between line segment a and line segment b

Referring to Equation 4, angle (8) $\theta_{u2r}$ may be obtained based on the difference between angle (7) and angle (9). Further, angle (9) may be obtained based on angle (3) and angle (6). Further, angle (3) may be obtained based on angle (1) and angle (2). Angle (6) may be obtained based on angle (4) and angle (5).

As an embodiment, angle (1) may be obtained based on the result of UWB ranging between the first UE 10-1 and the reference device 20.

As an embodiment, angles (2) and (4) may be obtained based on the result of UWB ranging between the second UE 10-2 and the reference device 20.

As an embodiment, angles (5) and (7) may be obtained based on the result of UWB ranging between the first UE 10-1 and the second UE 10-2.

In summary, in the fourth option of the registration procedure, for positioning of the target device 30, AoA information (angle (1) and angle (8)) between the reference device 20 and the first UE 10-1 is used as an AoA essential element. In this case, angle (1) and angle (8) both may be obtained only with the result of UWB ranging between the first UE 10-1 and the reference device 20 but, according to the context, angle (8) may not be obtained only with the result of UWB ranging between the reference device 20 and the first UE 10-1. In this case, the first UE 10-1 may obtain angle (8) based on, e.g., Equation 4 described above, using AoA information obtained as the result of UWB ranging between the first UE 10-1 and the second UE 10-2, as auxiliary information.

FIG. 9B illustrates a fourth embodiment of a registration procedure for registering a UWB-disabled device according to an embodiment of the disclosure.

The embodiment of FIG. 9B illustrates an example of a registration procedure according to the fifth option of the registration procedure illustrated in FIG. 6B(b).

In the embodiment of FIG. 9B, it is assumed that a plurality of UEs (e.g., the first UE 10-1 and the second UE 10-2) point at the target device 30, but there is no intersection toward the target device 30. Further, the first UE 10-1 and the second UE 10-2 may not only perform UWB ranging with the reference device 20 but may also perform UWB ranging therebetween. Accordingly, data (information) obtained as a result of UWB ranging between the first UE 10-1 and the second UE 10-2 may be used for positioning of the target device 30. For example, the distance information and direction (angle) information (e.g., AoA information) obtained as a result of UWB ranging between the first UE 10-1 and the second UE 10-2 may be used to calculate the distance between the first UE 10-1 and second UE 10-2 and the target device 30.

The registration procedure of FIG. 9B may include identifying the positions of the first UE 10-1 and the second UE 10-2 with respect to the position of the reference device 20 (first operation), obtaining the coordinates of the target device 30 on 2D (second operation), and/or obtaining the coordinates of the target device 30 on 3D (third operation).

Through the registration procedure, the position of the target device 30 may be identified with respect to the position (reference position) of the reference device 20. The identified position of the target device 30 may be stored and used in a subsequent recognition procedure.

In the embodiment of FIG. 9B, it is assumed that the position of the reference device 20 on the xy plane is (0,0,0).

**First operation**

In an embodiment, the first operation may be performed using the results of UWB ranging between the first UE 10-1 and the reference device 20 and UWB ranging between the second UE 10-2 and the reference device 20. For example, the UWB two-way ranging (TWR) scheme described with reference to FIG. 4 may be used. The operation in which each UE 10-1, 10-2 identifies the position of each UE 10-1, 10-2 with respect to the position of the reference device 20 through UWB ranging with the reference device 20 may follow the procedure described above in connection with FIG. 9A.

For example, as a result of the UWB ranging between the reference device 20 and the first UE 10-1/second UE 10-2, distance information (e.g., ToF information) indicating the distance between the reference device 20 and the first UE 10-1/second UE 10-2 and direction (angle) information (e.g., angle-of-arrival (AoA) information including AoA azimuth (horizontal angle) and/or AoA elevation (vertical angle)) indicating the angle between the reference device 20 and the UE 10/second UE 10-2 may be obtained. For example, through UWB ranging, each distance (e.g., dr1 and dr2 of FIG. 9B(a)) between the reference device 20 and the first UE 10-1/second UE on 3D, each horizontal angle (AoA azimuth) between the reference device 20 and the first UE 10-1/second UE 10-2 with respect to the reference device 20, and each vertical angle (AoA elevation) between the reference device 20 and the first UE 10-1/second UE 10-2 with respect to the reference device 20 may be obtained.

Each position of the first UE 10-1/second UE 10-2 with respect to the position of the reference device 20 may be determined based on the distance information and direction information. For example, the position of the first UE 10-1/second UE 10-2 may be determined based on Equation 1 described above.

**Second operation**

In the embodiment of FIG. 9B, as described above, there is no three-dimensional intersection between the line segments from the respective UEs 10-1, 10-2 to the target device 30. However, since the UEs 10-1, 10-2 both point at the target device 30, there is always a two-dimensional intersection. Therefore, it is needed to obtain the two-dimensional intersection (the two-dimensional coordinates of the target device) and then obtain the three-dimensional coordinates of the target device based on the same. The second operation corresponds to the operation of determining the two-dimensional coordinates (intersection) of the target device.

The second operation is described below with reference to FIG. 9B(b). FIG. 9B(b) illustrates the positions of the first UE 10-1, the second UE 10-2, and the target device 30 projected to the xy plane (two-dimensional plane).

Each parameter of FIG. 9B(b) is described below.

$d_{r1}$: Distance between the reference device 20 and the first UE 10-1 on the xy plane

$d_{r2}$: Distance between the reference device 20 and the second UE 10-2 on the xy plane

$d_{12}$: Distance between the first UE 10-1 and the second UE 10-2 on the xy plane

x: Distance between the intersection o and the first UE 10-1 on the xy plane

y: Distance between the intersection o and the second UE 10-2 on the xy plane

Here, the intersection o corresponds to the intersection of the normal to the line segment corresponding to $d_{12}$ of the target device 30 on the xy plane.

$\theta_{\alpha}$: Angle between the line segment corresponding to $d_{t2}$ and the line segment corresponding to $d_{12}$ on the xy plane

$\theta_{\beta}$: Angle between the line segment corresponding to $d_{t1}$ and the line segment corresponding to $d_{12}$ on the xy plane

In an embodiment, the second operation may be performed using the results of UWB ranging (first UWB ranging) between the first UE 10-1 and the reference device 20, UWB ranging (second UWB ranging) between the second UE 10-2 and the reference device 20, and/or UWB ranging (third UWB ranging) between the first UE 10-1 and the second UE 10-2.

As an embodiment, information about the distance $d_{r1}$ between the reference device 20 and the first UE 10-1 may be obtained through the result of the first UWB ranging.

As an embodiment, information about the distance $d_{r2}$ between the reference device 20 and the second UE 10-2 may be obtained through the result of the first UWB ranging.

As an embodiment, information about the distance $d_{12}$ between the first UWB device 10-1 and the second UWB device 10-2 and information about the angle between the first UWB device 10-1 and the second UWB device 10-2 may be obtained through the result of third UWB ranging.

As an embodiment, the information about the angle between the first UWB device 10-1 and the second UWB device 10-2 may include information about the angle $\theta_{12}$ between the first UWB device 10-1 and the second UWB device 10-2 with respect to the first UWB device 10-1 and/or information about the angle $\theta_{21}$ between the second UWB device 10-2 and the first UWB device 10-1 with respect to the second UWB device 10-2.

In an embodiment, the first UWB device 10-1 and/or the second UWB device 10-2 may obtain the distance $d_{t1}$ between the first UWB device 10-1 and the target device 30 and the distance $d_{t2}$ between the second UWB device 10-2 and the target device 30. For example, the first UWB device 10-1 and/or the second UWB device 10-2 may obtain the distances $d_{t1}$ and $d_{t2}$ using Equation 5 below.

[Equation 5]

$$\theta_\alpha = |\pi/2 - \theta_{12}|, \qquad \theta_\beta = |\pi/2 - \theta_{21}|$$
$$x + y = d_{12}, \qquad x\tan\theta_\alpha = y\tan\theta_\beta$$
$$d_{t1} = \frac{x}{\cos(\theta_\alpha)}, \qquad d_{t2} = \frac{x}{\cos(\theta_\beta)}$$

As an embodiment, the first UWB device 10-1 and/or the second UWB device 10-2 may obtain the coordinates $(x_t, y_t)$ of the target device 30 on 2D using the obtained distances $d_{t1}$ and $d_{t2}$.

**Third operation**

The third operation corresponds to the operation of determining the three-dimensional coordinates of the target device 30.

As an embodiment, the third operation may be performed using a sensor (e.g., a (gravity) acceleration sensor) of each UE 10-1, 10-2. For example, the acceleration sensor may be used in the third operation to obtain an inclination (e.g., an inclination relative to the ground) of each UE 10-1, 10-2 pointing at the target device 30.

As an embodiment, the first UE 10-1 may obtain a first inclination $\varphi_g$ for the target device 30 using the acceleration sensor at the position of the first UE 10-1, and the second UE 10-2 may obtain a second inclination $\varphi'_g$ for the target device 30 using the acceleration sensor at the position of the second UE 10-2.

As an embodiment, the first UE 10-1 and/or the second UE 10-2 may obtain the three-dimensional coordinates $(X_t, Y_t, Z_t)$ from the two-dimensional coordinates $(\overline{x_t, y_t})$ of the target device 30 using the first inclination $\varphi_g$ and/or the second inclination $\varphi'_g$. The operation of obtaining the three-dimensional coordinates $(X_t, Y_t, Z_t)$ from the two-dimensional coordinates $(X_t, Y_t)$ using the inclination may be performed according to, e.g., the above-described procedure of FIG. 9A.

In summary, in the fifth option of the registration procedure, since there is no three-dimensional intersection between the line segments from the respective UEs 10-1, 10-2 to the target device 30, the two-dimensional coordinates of the target device may be first obtained through the two-dimensional intersection, and the two-dimensional coordinates may then be expanded to the three-dimensional coordinates based on the inclination toward the target device 30. In this case, the two-dimensional coordinates of the target device 30 may be obtained using the distance information between each UE 10-1, 10-2 and the target device 30, obtained using the result of UWB ranging between the first UE 10-1 and the second UE 10-2.

FIG. 9C illustrates a fifth embodiment of a registration procedure for registering a UWB-disabled device according to an embodiment of the disclosure.

The embodiment of FIG. 9C illustrates an example of a registration procedure according to the sixth option of the registration procedure illustrated in FIG. 6B(c).

In the embodiment of FIG. 9C, it is assumed that a plurality of UEs (e.g., the first UE 10-1, the second UE 10-2, and the third UE 10-2) point at the target device 30, and there is a three-dimensional intersection toward the target device 30. Accordingly, the coordinates of the target device 30 may be obtained by obtaining the intersection of the line segments (straight lines) passing through the coordinates of each UE 10-1, 10-2, 10-3 and the coordinates of the target device 30 with respect to the position (reference position) of the reference device 20.

The registration procedure of FIG. 9C may include identifying the positions of the first UE 10-1, the second UE 10-2, and the third UE 10-3 with respect to the position of the reference device 20 (first operation) and/or obtaining the three-dimensional coordinates of the target device 30 (second operation).

Through the registration procedure, the position of the target device 30 may be identified with respect to the position (reference position) of the reference device 20. The identified position of the target device 30 may be stored and used in a subsequent recognition procedure.

In the embodiment of FIG. 9C, it is assumed that the position of the reference device 20 on the xy plane is (0,0,0).

**First operation**

In an embodiment, the first operation may be performed using the results of UWB ranging between the first UE 10-1 and the reference device 20, UWB ranging between the second UE 10-2 and the reference device 20, and UWB ranging between the third UE 10-3 and the reference device 20. For example, the UWB two-way ranging (TWR) scheme described with reference to FIG. 4 may be used. The operation in which each UE 10-1, 10-2, 10-3 identifies the position of each UE 10-1, 10-2, 10-2 with respect to the position of the reference device 20 through UWB ranging with the reference device 20 may follow the procedure described above in connection with FIG. 9A.

For example, as a result of the UWB ranging between the reference device 20 and the first UE 10-1/second UE 10-2/third UE 10-3, distance information (e.g., ToF information) indicating the distance between the reference device 20 and the first UE 10-1/second UE 10-2/third UE 10-3 and direction (angle) information (e.g., angle-of-arrival (AoA) information including AoA azimuth (horizontal angle) and/or AoA elevation (vertical angle)) indicating the angle between the reference device 20 and the UE 10/second UE 10-2/third UE 10-3 may be obtained. For example, through UWB ranging, each distance between the reference device 20 and the first UE 10-1/second UE/third UE on 3D, each horizontal angle (AoA azimuth) between the reference device 20 and the first UE 10-1/second UE 10-2/third UE 10-3 with respect to the reference device 20, and each vertical angle (AoA elevation) between the reference device 20 and the first UE 10-1/second UE 10-2/third UE 10-3 with respect to the reference device 20 may be obtained.

Each position of the first UE 10-1/second UE 10-2/third UE 10-3 with respect to the position of the reference device 20 may be determined based on the distance information and direction information. For example, the position of the first UE 10-1/second UE 10-2/third UE 10-3 may be determined based on Equation 1 described above.

### Second operation

In the embodiment of FIG. 9C, unlike in the embodiment of FIG. 9B, there is a three-dimensional intersection between the line segments from the respective UEs 10-1, 10-2 to the target device 30. Therefore, it is possible to obtain the three-dimensional coordinates directly through the two-dimensional intersection.

The second operation corresponds to the operation of determining the three-dimensional coordinates of the target device.

As an embodiment, the second operation may include obtaining the coordinates (position) of each UE 10-1, 10-2, 10-3 obtained through the first operation and the coordinates (position) of the target device to be obtained, i.e., the line segments passing through the coordinates of the two points.

For example, the line segment (straight line) passing through two points (($x_u$,$y_u$,$z_u$) and ($x_v$,$y_v$,$z_v$)) may be represented by Equation 6 below.

[Equation 6]

$$\frac{x-x_u}{x_v-x_u} = \frac{y-y_u}{y_v-y_u} = \frac{z-z_u}{z_v-z_u}$$

The first UE 10-1/second UE 10-2/third UE 10-2 may obtain each of the equations for the straight lines for a first line segment (first straight line) passing through the coordinates of the first UE 10-1 and the coordinates of the target device, a second line segment (second straight line) passing through the coordinates of the second UE 10-2 and the coordinates of the target device, and a third line segment (third straight line) passing through the coordinates of the third UE 10-3 and the coordinates of the target device, using Equation 6.

The first UE 10-1, the second UE 10-2, and/or the third UE 10-3 may obtain the coordinates of the inclination of the corresponding straight lines using the obtained straight line equations. The so-obtained coordinates of the intersection of the line segments (straight lines) corresponds to the three-dimensional coordinates of the target device 30.

In summary, in the sixth option of the registration procedure, since there is a three-dimensional intersection of the line segments from the respective UEs 10-1, 10-2, 10-3 to the target device 30, the three-dimensional coordinates of the target device 30 may be directly obtained by calculating the intersection of the line segments passing through the coordinates of each UE 10-1, 10-2, 10-3 and the coordinates of the target device 30.

FIG. 10 illustrates a method for recognizing a target device based on a distance to a straight line pointed at by a UE according to an embodiment of the disclosure.

The embodiment of FIG. 10 is an example of the recognition procedure of FIG. 7. In the embodiment of FIG. 10, the UE 10 may recognize the target device 30 using the distance h between the straight line pointed at by the UE 10 and the target device 30.

In an embodiment, the distance h may be calculated based on Equation 7 below to obtain the distance between straight lines passing through two points.

[Equation 7]

$$h = \left|\overrightarrow{UT}\right| \sin(\theta_{u2t})$$

$$\left|\overrightarrow{UT} \times \overrightarrow{UV}\right| = \left|\overrightarrow{UT}\right| \cdot \left|\overrightarrow{UV}\right| \sin(\theta_{u2t})$$

$$\sin(\theta_{t2u}) = \frac{\left|\overrightarrow{UT} \times \overrightarrow{UV}\right|}{\left|\overrightarrow{UT}\right| \cdot \left|\overrightarrow{UV}\right|}$$

$$h = \frac{\left|\overrightarrow{UT} \times \overrightarrow{UV}\right|}{\left|\overrightarrow{UV}\right|}$$

Examples of parameters used in Equation 7 and the distance h are shown in FIG. 10(a) and (b).

Here, $U$ denotes the position of the UE 10. The coordinates of $U$ may be denoted as $U=(x_u,y_u,z_u)$. In an embodiment, $U$ may be obtained through a UWB ranging procedure between the UE 10 and the reference device 20 described above in connection with FIGS. 6 to 9.

$T$ denotes the position of the target device 30. $T$ may be obtained through the registration procedure described above in connection with FIGS. 6, 8, and 9, and the coordinates of $T$ may be denoted as $T=(x_t,y_t,z_t)$.

$V$ may be the position of any point positioned in the direction (or straight line) in which the UE 10 points to recognize the target device 30. For example, as shown in FIG. 10(a), $V$ may be the coordinates of the point which is a distance of 1 away from $U$ positioned on the straight line pointed at by the UE 10. The coordinates of $V$ may be denoted as $V=(x_v,y_v,z_v)$. In an embodiment, $V$ may be obtained through the same procedure as the second step and the third step of the embodiment of FIG. 8.

In the embodiment of FIG. 10, $\theta_{r2u}$ denotes the horizontal angle between the UE 10 and the reference device 20 with respect to the reference device 20.

$\theta_{r2t}$ denotes the horizontal angle between the target device 30 and the reference device 20 with respect to the reference device 20.

$\theta_{u2r}$ denotes the horizontal angle between the UE 10 and the reference device 20 with respect to the UE 10.

$\theta_{u2t}$ denotes the horizontal angle between the UE 10 and the target device 30 with respect to the UE 10.

The UE 10 may recognize the target device 30 based on the obtained (or calculated) distance h. In an embodiment, the UE 10 may determine whether the distance h is smaller than a preset threshold. When the distance h is smaller than the preset threshold, the UE 10 may recognize that the target device 30 (is positioned in the pointing direction of the UE 10 and thus) is controlled. Or, when the distance h is larger than the preset threshold, the UE 10 may recognize that the target device 30 (is not positioned in the pointing direction of the UE 10 and thus) is not controlled.

When the target device 30 to be controlled is recognized, the UE 10 may provide (e.g., display) control information (e.g., a control UX) for controlling the target device 30. In this case, the user may control the target device 30 using the control information.

Meanwhile, as shown in FIG. 10(a), a plurality of target devices 30 may be present. In this case, when a plurality of target devices 30 to be controlled are recognized, the UE 10 may provide (e.g., display) list information about the plurality of target devices 30 to the user. In this case, the user may select one target device 30 from among the plurality of target devices 30 included in the list information and control the corresponding target device 30. In an embodiment, when the target device 30 is selected, the UE 10 may provide control information for controlling the target device 30 to the user.

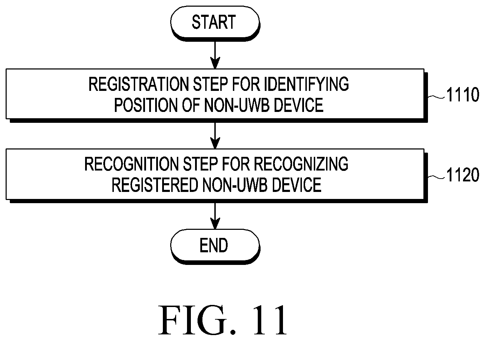

FIG. 11 is a flowchart illustrating a method of a first UWB device according to an embodiment of the disclosure.

In the embodiment of FIG. 11, the first UWB device may be a UE described above in connection with FIGS. 6 to 10. Further, the second UWB device may be a reference device described above in connection with FIGS. 6 to 10. Further, the non-UWB device may be a target device described above in connection with FIGS. 6 to 10.

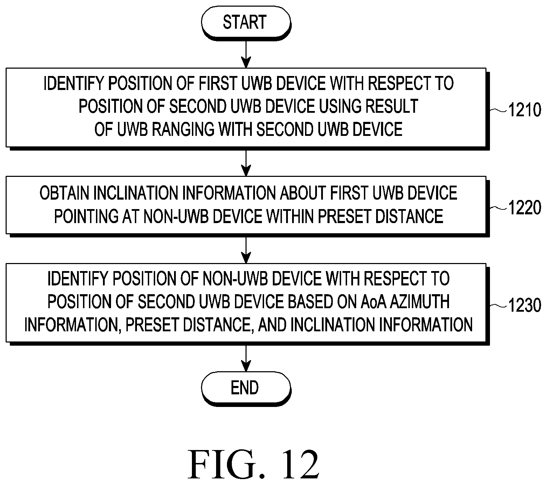

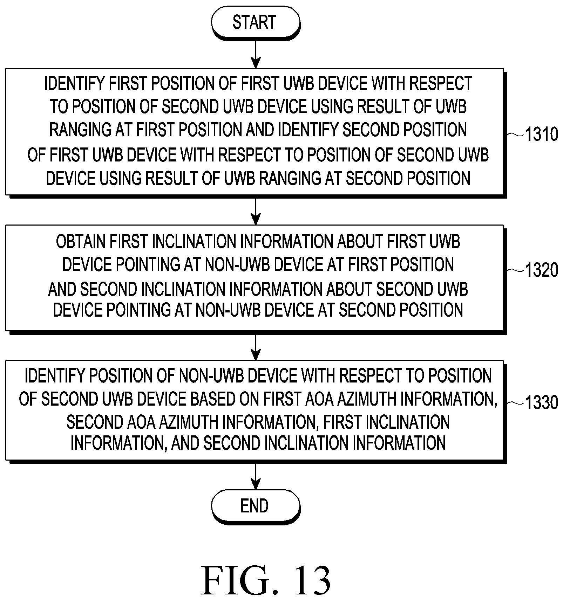

Referring to FIG. 11, the first UWB device may perform a registration step for identifying the position of the non-UWB device (S1110). In an embodiment, the registration step may include identifying a position of a non-UWB device with respect to a position of a second UWB device based on UWB ranging between the first UWB device and the second UWB device. For the operations of the registration step, refer to the description made above in connection with FIGS. 6, 8, and 9 and the description made below in connection with FIGS. 12 and 13.

The first UWB device may perform a recognition step for recognizing a registered non-UWB device (S1120). In an embodiment, the recognition step may include identifying whether the first UWB device points at the registered non-UWB device based on the pointing direction of the first UWB device and the position of the non-UWB device identified in the registration step. For the operations of the recognition step, refer to the description made above in connection with FIGS. 7 and 10.

FIG. 12 is a flowchart illustrating a registration step of a first UWB device according to an embodiment of the disclosure.

The registration step of FIG. 12 may be an embodiment following option 1 or 2 of the registration step described above in connection with FIGS. 6 and 8. Accordingly, for the operations of the registration step of FIG. 12, refer to the description of FIGS. 6 and 8.

In the embodiment of FIG. 12, the first UWB device may be a UE described above in connection with FIGS. 6 to 10. Further, the second UWB device may be a reference device described above in connection with FIGS. 6 to 10. Further, the non-UWB device may be a target device described above in connection with FIGS. 6 to 10.

Referring to FIG. 12, the first UWB device may identify the position of the first electronic device with respect to the position of the second UWB device using the result of UWB ranging with the second UWB device (1210). In an embodiment, the UWB ranging may be performed based on a two-way ranging (TWR) scheme. In an embodiment, the result of the UWB ranging may include time-of-flight (ToF) information, angle-of-arrival (AoA) azimuth information, and AoA elevation information. The identification of the position of the first electronic device with respect to the position of the second UWB device may be based on Equation 1.

The first UWB device may obtain inclination information about the first UWB device that points at the non-UWB device within a preset distance (1220). Accordingly, the position of the non-UWB device with respect to the position of the first UWB device may be identified.

The first UWB device may identify the position of the non-UWB device with respect to the position of the second UWB device based on the AoA azimuth information, the preset distance, and the inclination information (1230). The identification of the position of the non-UWB device with respect to the position of the second UWB device may be based on Equations 2 and 3.

FIG. 13 is a flowchart illustrating a registration step of a first UWB device according to another embodiment of the disclosure.

The registration step of FIG. 13 may be an embodiment following option 3 of the registration step described above in connection with FIGS. 6 and 9. Accordingly, for the operations of the registration step of FIG. 13, refer to the description of FIGS. 6 and 9.

In the embodiment of FIG. 13, the first UWB device may be a UE described above in connection with FIGS. 6 to 10. Further, the second UWB device may be a reference device described above in connection with FIGS. 6 to 10. Further, the non-UWB device may be a target device described above in connection with FIGS. 6 to 10.

Referring to FIG. 13, the first UWB device may identify the first position of the first electronic device with respect to the position of the second UWB device using the result of UWB ranging at the first position and identify the second position of the first electronic device with respect to the position of the second UWB device using the result of UWB ranging at the second position (1310). In an embodiment, the result of the UWB ranging at the first position may include first ToF information, first AoA azimuth information, and first AoA elevation information about the first position, and the result of the UWB ranging at the second position may include second ToF information, second AoA azimuth information, and second AoA elevation information about the second position. The identification of the first position and second position of the first electronic device with respect to the position of the second UWB device may be based on Equation 1.

The first UWB device may obtain first inclination information about the first UWB device pointing at the non-UWB device from the first position and second inclination information about the second UWB device pointing at the non-UWB device from the second position (1320). Thus, the position of the non-UWB device with respect to each of the first position and second position of the first UWB device may be identified.

The first UWB device may identify the position of the non-UWB device with respect to the position of the second UWB device based on the first AoA azimuth information, the second AoA azimuth information, the first inclination information, and the second inclination information (1330). In an embodiment, the first UWB device may identify the position of the non-UWB device with respect to the position of the second UWB device by obtaining an intersection of a first straight line pointing at the non-UWB device from the first position and a straight line pointing at the non-UWB device from the second position, based on the first AoA azimuth information, the second AoA azimuth information, the first inclination information, and the second inclination information. The identification of the position of the non-UWB device with respect to the position of the second UWB device may be based on Equations 2 and 3.

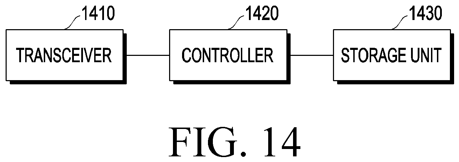

FIG. 14 is a view illustrating a structure of a first electronic device according to an embodiment of the disclosure.

In the embodiment of FIG. 14, the first electronic device may be a UWB-enabled device. For example, the first electronic device may be the above-described UE or a reference device.

Referring to FIG. 14, the first electronic device may include a transceiver 1410, a controller 1420, and a storage 1430. In the disclosure, the controller may be defined as a circuit or application-specific integrated circuit or at least one processor.

The transceiver 1410 may transmit and receive signals to/from other network entities. The transceiver 1410 may transmit/receive data for UWB ranging using, e.g., UWB communication.

The controller 1420 may control the overall operation of the first electronic device according to an embodiment. For example, the controller 1420 may control inter-block signal flow to perform the operations according to the above-described flowchart. Specifically, the controller 1420 may control the operations of the first electronic device described above with reference to FIGS. 1 to 13.

The storage unit 1430 may store at least one of information transmitted/received via the transceiver 1410 and information generated via the controller 1420. For example, the storage unit 1430 may store information and data required to register and recognize a non-UWB device using UWB described with reference to FIGS. 1 to 11.

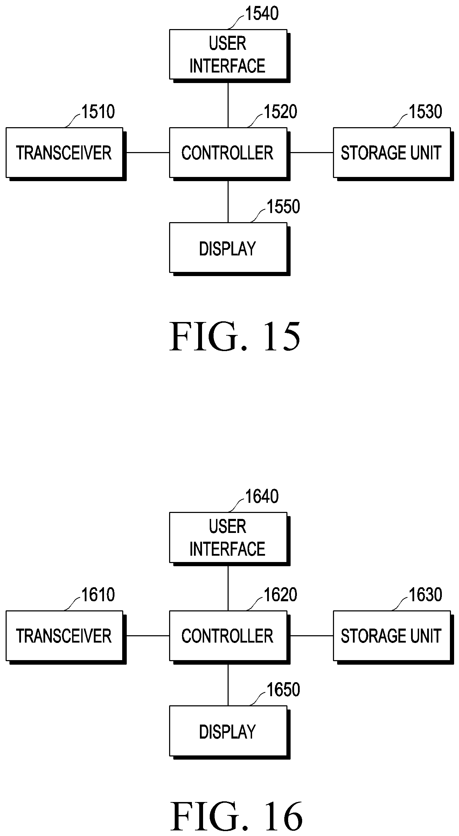

FIG. 15 is a view illustrating a structure of a first electronic device according to another embodiment of the disclosure.

In the embodiment of FIG. 15, the first electronic device may be a UWB-enabled device. For example, the first electronic device may be the above-described UE or a reference device.

Referring to FIG. 15, the first electronic device may include a transceiver 1510, a controller 1520, a storage unit 1530, a user interface 1540, and/or a display 1550. In the disclosure, the controller may be defined as a circuit or application-specific integrated circuit or at least one processor. The first electronic device according to the embodiment of FIG. 15 may further include the user interface 1540 and/or the display 1550 as compared with the first electronic device according to the embodiment of FIG. 14.

The transceiver 1510 may transmit and receive a signal to and from another electronic device. The transceiver 1510 may transmit and receive data for UWB ranging to/from the second electronic device through, e.g., UWB communication.

The controller 1520 may control the overall operation of the first electronic device according to an embodiment. For example, the controller 1520 may control inter-block signal flow to perform the operations according to the above-described flowchart. Specifically, the controller 1520 may control the operations of the first electronic device described above with reference to FIGS. 1 to 13.

The storage unit 1530 may store at least one of information transmitted/received via the transceiver 1510 and information generated via the controller 1520. For example, the storage unit 1530 may store information and data required to register and recognize a non-UWB device using UWB described with reference to FIGS. 1 to 11.

The user interface 1540 includes various types of input/output means provided in the first electronic device. In other words, the user interface may receive the user's input using various input means, and the controller 1520 may control the first electronic device based on the received user input. Further, the user interface 1540 may perform output based on a command of the controller 1520 using various output means.

The display 1550 outputs an image on the display screen. The display 1550 may output various display objects, such as a user interface, based on a control command of the controller or content executed by the controller 1520. For example, the display 1550 may display a control UX for controlling the above-described recognized target device.

FIG. 16 is a view illustrating a structure of a second electronic device according to another embodiment of the disclosure.

In the embodiment of FIG. 16, the second electronic device may be a UWB-disabled device. For example, the second electronic device may be the above-described target device.

Referring to FIG. 16, the second electronic device may include a transceiver 1610, a controller 1620, a storage unit 1630, a user interface 1640, and/or a display 1650. In the disclosure, the controller may be defined as a circuit or application-specific integrated circuit or at least one processor. Some of the components according to the embodiment of FIG. 16 may be optional components. For example, the display 1650 may be an optional component.

The transceiver 1610 may transmit and receive a signal to and from another electronic device. The transceiver 1610 may receive a control signal for controlling the second electronic device from the first electronic device, for example.

The controller 1620 may control the overall operation of the second electronic device according to an embodiment. For example, the controller 1620 may control inter-block signal flow to perform the operations according to the above-described flowchart. Specifically, the controller 1620 may control the operations of the second electronic device described above with reference to FIGS. 1 to 13.

The storage unit 1630 may store at least one of information transmitted/received via the transceiver 1610 and information generated via the controller 1620. For example, the storage unit 1630 may store information and data required to register and recognize a non-UWB device using UWB described with reference to FIGS. 1 to 11.

The user interface 1640 includes various types of input/output means provided in the second electronic device. In other words, the user interface may receive the user's input using various input means, and the controller 1620 may control the first electronic device based on the received user input. Further, the user interface 1640 may perform output based on a command of the controller 1620 using various output means.

The display 1650 outputs an image on the display screen. The display 1650 may output various display objects, such as a user interface, based on a control command of the controller or content executed by the controller 1620.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the present invention have been described above, various changes may be made thereto without departing from the scope of the present invention. Thus, the scope of the disclosure should not be limited to the above-described embodiments, and should rather be defined by the following claims and equivalents thereof.

**Claims**

1. A method by a first ultra-wide band (UWB) device, comprising:

   identifying a position of a non-UWB device with respect to a position of a second UWB device based on UWB ranging between the first UWB device and the second UWB device; and
   recognizing the non-UWB device based on a point direction of the first UWB device and the identified position of the non-UWB device.

2. The method of claim 1, wherein identifying the position of the non-UWB device includes identifying a position of the first UWB device with respect to the position of the second UWB device using a result of the UWB ranging, and wherein the result of the UWB ranging includes at least one of time-of-flight (ToF) information, angle-of-arrival (AoA) azimuth information, and AoA elevation information.

3. The method of claim 2, wherein identifying the position of the non-UWB device includes:

   obtaining inclination information about the first UWB device pointing at the non-UWB device within a preset distance; and
   identifying the position of the non-UWB device with respect to the position of the second UWB device based on the AoA azimuth information, the preset distance, and the inclination information.

4. The method of claim 1, wherein identifying the position of the non-UWB device includes:

   identifying a first position of the first UWB device with respect to the position of the second UWB device using a result of the UWB ranging at the first position; and
   identifying a second position of the first UWB device with respect to the position of the second UWB device using a result of the UWB ranging at the second position, and
   wherein the result of the UWB ranging at the first position includes first time-of-flight (ToF) information, first angle-of-arrival (AoA) azimuth information, and first AoA elevation information about the first position, and the result of the UWB ranging at the second position includes second ToF information, second AoA azimuth information, and second AoA elevation information about the second position.

5. The method of claim 4, wherein identifying the position of the non-UWB device includes:

   obtaining first inclination information about the first UWB device pointing at the non-UWB device from the first position and second inclination information about the second UWB device pointing at the non-UWB device from the second position; and
   identifying the position of the non-UWB device with respect to the position of the second UWB device by obtaining an intersection of a first straight line pointing at the non-UWB device from the first position and a second straight line pointing at the non-UWB device from the second position, based on the first AoA azimuth information, the second AoA azimuth information, the first inclination information, and the second inclination information.

6. The method of claim 1, wherein the UWB ranging is performed based on a two-way ranging (TWR) scheme.

7. The method of claim 1, wherein recognizing the non-UWB device includes providing control information for controlling the recognized non-UWB device.

8. The method of claim 1, wherein identifying the position of the non-UWB device is performed to register the non-UWB device as a target device for control by the first UWB device.

9. A first UWB device, comprising:

a memory; and
a transceiver; and
a controller connected to the memory and the transceiver, wherein the controller is configured to:

identify a position of a non-UWB device with respect to a position of a second UWB device based on UWB ranging between the first UWB device and the second UWB device; and
recognize the non-UWB device based on a point direction of the first UWB device and the identified position of the non-UWB device.

10. The first UWB device of claim 9, wherein the controller is configured to identify a position of the first UWB device with respect to the position of the second UWB device using a result of the UWB ranging, and
wherein the result of the UWB ranging includes at least one of time-of-flight (ToF) information, angle-of-arrival (AoA) azimuth information, and AoA elevation information.

11. The first UWB device of claim 10, wherein the controller is configured to:

obtain inclination information about the first UWB device pointing at the non-UWB device within a preset distance; and
identify the position of the non-UWB device with respect to the position of the second UWB device based on the AoA azimuth information, the preset distance, and the inclination information.

12. The first UWB device of claim 9, wherein the controller is configured to:

identify a first position of the first UWB device with respect to the position of the second UWB device using a result of the UWB ranging at the first position; and
identify a second position of the first UWB device with respect to the position of the second UWB device using a result of the UWB ranging at the second position, and
wherein the result of the UWB ranging at the first position includes first time-of-flight (ToF) information, first angle-of-arrival (AoA) azimuth information, and first AoA elevation information about the first position, and the result of the UWB ranging at the second position includes second ToF information, second AoA azimuth information, and second AoA elevation information about the second position.

13. The first UWB device of claim 12, wherein the controller is configured to:

obtain first inclination information about the first UWB device pointing at the non-UWB device from the first position and second inclination information about the second UWB device pointing at the non-UWB device from the second position; and
identify the position of the non-UWB device with respect to the position of the second UWB device by obtaining an intersection of a first straight line pointing at the non-UWB device from the first position and a second straight line pointing at the non-UWB device from the second position, based on the first AoA azimuth information, the second AoA azimuth information, the first inclination information, and the second inclination information.

14. The first UWB device of claim 9, wherein the UWB ranging is performed based on a two-way ranging (TWR) scheme.

15. The first UWB device of claim 9, wherein the controller is configured to provide control information for controlling the recognized non-UWB device.

100

110

| UWB-enabled Application Layer |

— — — — — — — — Framework API — — — — — — — —

120

| Common Service & Management Layer |

130

UWB Subsystem (UWBS)

| UWB MAC Layer |

| UWB Physical Layer |

# FIG. 1

EP 4 318 018 A1

200

210

211

UWB-enabled
Application Layer

Framework
API

212

Framework

213

OOB
Connector

214

Secure Component

215

UWBS

220

221

UWB-enabled
Application Layer

Proprietary
API

223

OOB
Connector

222

Framework

225

UWBS

224

Secure Component

FIG. 2

FIG. 3

FIG. 4

Target device
(non-UWB)

30

20

Reference

UWB

Point & Control

10

User device

FIG. 5

(a)

(b)

(c)

FIG. 6A

FIG. 6B

(a)

$h_1 <$ Threshold

(b)

# FIG. 7

ref (w/ UWB): (0, 0, 0)

$\underline{20}$

target: $(x_t + \alpha, y_t + \beta, z_t + \gamma)$

$\theta_{r2u}$

$d_{r2u}\cos(\varphi_{r2u})$

d: distance
$\theta$: Azimuth
$\varphi$: Elevation

$d_\ell$

$30$

$d_{u2t}$

$\theta_{u2r}$

target (non-UWB):
$(x_t, y_t, z_t)$

$\theta_{r2t} = \left(\dfrac{\pi}{2} - \theta_{u2r}\right) + \theta_{r2u}$

$10$

$\sqrt{\alpha^2 + \beta^2 + \gamma^2}$
$= d_\ell$

user : $(x_u, y_u, z_u)$

(a)

$10$

$d_{r2u}$

$20$

$z_u$

$\varphi_{r2u}$

$d_{r2u}\cos(\varphi_{r2u})$

$z_r$

(b)

$d_{u2t}$

$\varphi_g$

$d_{u2t}\cos(\varphi_g)$

$d_{u2t}\sin(\varphi_g)$

$\varphi_g$

(c)

# FIG. 8A

20 ⌀ : reference
30 ● : target
10 ⊗ : user

(0, 0, 0)

$(\bar{x}_t, \bar{y}_t, \bar{z}_t)$ ●

$(x'_u, y'_u, z'_u)$

$(x_u, y_u, z_u)$

(a)

$(x_u, y_u)$

$(x'_u, y'_u)$

$(\bar{x}_t, \bar{y}_t)$

(b)

$\bar{z}_t$

$\varphi_g$

$(\bar{x}_t, \bar{y}_t)$

$\varphi'_g$

(c)

# FIG. 8B

⊘ : reference

● : target

⊗ : user

FIG. 9A

(a)

(b)                                    (c)

# FIG. 9B

⊘ : reference
● : target
⊗ : user

20

$(x_t, y_t, z_t)$ ● —30

$\theta_{u2d}$

$(x_v, y_v, z_v)$

10-3
user 3

10-1
user 1
$(x_u, y_u, z_u)$

10-2
user 2

# FIG. 9C

20 ~⊘ : reference
30 ~● : target
10 ~⊗ : user

(0, 0, 0)

$\theta_{r2u}$

● $(x_t, y_t, z_t)$

$\theta_{u2r}$

$(x_o, y_o, z_o)$

$(x_v, y_v, z_v)$

$d = 1$

$\theta_{r2t} = \left(\dfrac{\pi}{2} - \theta_{u2r}\right) + \theta_{r2u}$

user : $(x_u, y_u, z_u)$

(a)

h ● T = $(x_t, y_t, z_t)$

V = $(x_v, y_v, z_v)$

$\theta_{u2t}$

⊗ U = $(x_u, y_u, z_u)$

(b)

# FIG. 10

START

REGISTRATION STEP FOR IDENTIFYING POSITION OF NON-UWB DEVICE ~1110

RECOGNITION STEP FOR RECOGNIZING REGISTERED NON-UWB DEVICE ~1120

END

FIG. 11

START

| IDENTIFY POSITION OF FIRST UWB DEVICE WITH RESPECT TO POSITION OF SECOND UWB DEVICE USING RESULT OF UWB RANGING WITH SECOND UWB DEVICE | ~1210 |

| OBTAIN INCLINATION INFORMATION ABOUT FIRST UWB DEVICE POINTING AT NON-UWB DEVICE WITHIN PRESET DISTANCE | ~1220 |

| IDENTIFY POSITION OF NON-UWB DEVICE WITH RESPECT TO POSITION OF SECOND UWB DEVICE BASED ON AoA AZIMUTH INFORMATION, PRESET DISTANCE, AND INCLINATION INFORMATION | ~1230 |

END

# FIG. 12

START

IDENTIFY FIRST POSITION OF FIRST UWB DEVICE WITH RESPECT TO POSITION OF SECOND UWB DEVICE USING RESULT OF UWB RANGING AT FIRST POSITION AND IDENTIFY SECOND POSITION OF FIRST UWB DEVICE WITH RESPECT TO POSITION OF SECOND UWB DEVICE USING RESULT OF UWB RANGING AT SECOND POSITION ～1310

OBTAIN FIRST INCLINATION INFORMATION ABOUT FIRST UWB DEVICE POINTING AT NON-UWB DEVICE AT FIRST POSITION AND SECOND INCLINATION INFORMATION ABOUT SECOND UWB DEVICE POINTING AT NON-UWB DEVICE AT SECOND POSITION ～1320

IDENTIFY POSITION OF NON-UWB DEVICE WITH RESPECT TO POSITION OF SECOND UWB DEVICE BASED ON FIRST AOA AZIMUTH INFORMATION, SECOND AOA AZIMUTH INFORMATION, FIRST INCLINATION INFORMATION, AND SECOND INCLINATION INFORMATION ～1330

END

FIG. 13

1410 1420 1430

| TRANSCEIVER | | CONTROLLER | | STORAGE UNIT |

FIG. 14

FIG. 15

FIG. 16

| INTERNATIONAL SEARCH REPORT | International application No. |
| --- | --- |
| | **PCT/KR2022/006190** |

**A.    CLASSIFICATION OF SUBJECT MATTER**

**G01S 5/02**(2010.01)i; **G01S 5/14**(2006.01)i; **G01S 3/14**(2006.01)i; **G01S 13/02**(2006.01)i; **G01S 13/76**(2006.01)i; **G01S 13/42**(2006.01)i

According to International Patent Classification (IPC) or to both national classification and IPC

**B.    FIELDS SEARCHED**

Minimum documentation searched (classification system followed by classification symbols)

G01S 5/02(2010.01); G01S 13/02(2006.01); G01S 13/06(2006.01); G01S 13/08(2006.01); G01S 13/76(2006.01); G01S 13/78(2006.01); G01S 13/87(2006.01); G01S 5/14(2006.01); G08C 17/02(2006.01); H04W 84/18(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: UWB, 위치(location), 인식(identifying), 포인팅(pointing), 방향(direction)

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2014-0133558 A (QUALCOMM INCORPORATED) 19 November 2014 (2014-11-19)<br>   See paragraphs [0046]-[0057], claim 1 and figures 2-3b. | 1-15 |
| A | US 2020-0182996 A1 (SAMSUNG ELECTRONICS CO., LTD.) 11 June 2020 (2020-06-11)<br>   See paragraphs [0107]-[0117], claims 1 and 11 and figures 1-3. | 1-15 |
| A | KR 10-2003-0065522 A (INTERNATIONAL BUSINESS MACHINES CORPORATION) 06 August 2003 (2003-08-06)<br>   See paragraphs [0040]-[0049] and figures 1-5. | 1-15 |
| A | KR 10-2010-0035914 A (S-1 CORPORATION) 07 April 2010 (2010-04-07)<br>   See claims 1-8 and figures 1-5. | 1-15 |
| A | WO 2020-145526 A1 (SAMSUNG ELECTRONICS CO., LTD.) 16 July 2020 (2020-07-16)<br>   See claims 1-10 and figures 1-9. | 1-15 |

☐ Further documents are listed in the continuation of Box C.    ☑ See patent family annex.

| | |
| --- | --- |
| \*    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| **16 August 2022** | **16 August 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

# EP 4 318 018 A1

## INTERNATIONAL SEARCH REPORT
### Information on patent family members

International application No.

**PCT/KR2022/006190**

| Patent document cited in search report | | | Publication date (day/month/year) | Patent family member(s) | | | Publication date (day/month/year) |
|---|---|---|---|---|---|---|---|
| KR | 10-2014-0133558 | A | 19 November 2014 | CN | 104105980 | A | 15 October 2014 |
| | | | | CN | 110133590 | A | 16 August 2019 |
| | | | | EP | 2812721 | A1 | 17 December 2014 |
| | | | | EP | 2812721 | B1 | 18 October 2017 |
| | | | | JP | 2015-514963 | A | 21 May 2015 |
| | | | | US | 2013-0211780 | A1 | 15 August 2013 |
| | | | | WO | 2013-119878 | A1 | 15 August 2013 |
| US | 2020-0182996 | A1 | 11 June 2020 | EP | 3841829 | A1 | 30 June 2021 |
| | | | | KR | 10-2021-0089641 | A | 16 July 2021 |
| | | | | US | 11262445 | B2 | 01 March 2022 |
| | | | | WO | 2020-117012 | A1 | 11 June 2020 |
| KR | 10-2003-0065522 | A | 06 August 2003 | AT | 268924 | T | 15 June 2004 |
| | | | | AU | 1511902 | A | 03 June 2002 |
| | | | | AU | 2002-15119 | A1 | 03 June 2002 |
| | | | | CA | 2427452 | A1 | 30 May 2002 |
| | | | | CA | 2427452 | C | 23 May 2006 |
| | | | | CN | 1692370 | A | 02 November 2005 |
| | | | | DE | 60103778 | T2 | 14 July 2005 |
| | | | | EP | 1337965 | A2 | 27 August 2003 |
| | | | | EP | 1337965 | B1 | 09 June 2004 |
| | | | | IL | 155911 | A | 28 February 2011 |
| | | | | JP | 2002-099918 | A | 05 April 2002 |
| | | | | JP | 2003-082053 | A | 19 March 2003 |
| | | | | JP | 2004-515099 | A | 20 May 2004 |
| | | | | JP | 3692500 | B2 | 07 September 2005 |
| | | | | JP | 3721164 | B2 | 30 November 2005 |
| | | | | KR | 10-0515228 | B1 | 16 September 2005 |
| | | | | SG | 114479 | A1 | 28 September 2005 |
| | | | | TW | 560203 | B | 01 November 2003 |
| | | | | US | 2002-0082026 | A1 | 27 June 2002 |
| | | | | US | 2003-0048849 | A1 | 13 March 2003 |
| | | | | US | 2005-0192683 | A1 | 01 September 2005 |
| | | | | US | 2006-0280335 | A1 | 14 December 2006 |
| | | | | US | 6925410 | B2 | 02 August 2005 |
| | | | | US | 7251364 | B2 | 31 July 2007 |
| | | | | US | 7492944 | B2 | 17 February 2009 |
| | | | | WO | 02-043023 | A3 | 17 October 2002 |
| | | | | WO | 02-43023 | A2 | 30 May 2002 |
| KR | 10-2010-0035914 | A | 07 April 2010 | KR | 10-1012851 | B1 | 08 February 2011 |
| WO | 2020-145526 | A1 | 16 July 2020 | EP | 3901660 | A1 | 27 October 2021 |
| | | | | KR | 10-2021-0102273 | A | 19 August 2021 |